# EUROPEAN PATENT APPLICATION

(11) **EP 4 417 497 A1**
(43) Date of publication of application: **21.08.2024**
(21) Application number: 24150324.2
(22) Date of filing: 04.01.2024
(51) Int. Cl.: B62J 9/14, B60K 1/04, B60L 50/64, B62J 43/16, B62J 43/23, B62J 43/28

(54) **STRADDLED ELECTRIC VEHICLE**

(30) Priority: 20.02.2023 JP 2023024145
(71) Applicant: Yamaha Hatsudoki Kabushiki Kaisha, Iwata-shi, Shizuoka-ken 438-8501 (JP)
(72) Inventor: KUROKI, Masahiro, Iwata-shi, 438-8501 (JP)
(74) Representative: Studio Torta S.p.A.

(57) **Abstract**

There is disclosed a straddled electric vehicle (1) including a vehicle body frame (21), a seat (5), a housing member (31), an electric motor (12), a battery (45), a battery case (51), and an elastic member (61); the housing member (31) being supported by the vehicle body frame (21);the housing member (31) being installed below the seat (5);the electric motor (12) propelling the straddled electric vehicle (1); the battery (45) supplying power to the electric motor (12); the battery (45) being installed below the seat (5); at least part of the battery (45) being installed in an internal space (32) of the housing member (31); the battery case (51) supporting the battery (45); the battery case (51) being supported by the housing member (31) via an elastic member (61).

## Description

### Technical Field

The present invention relates to a straddled electric vehicle.

### Related Art

JP 2010-228661 A discloses a straddled electric vehicle. The straddled electric vehicle is classified as a scooter-type vehicle, for example. The straddled electric vehicle includes a handlebar, a seat, and a foot board. The seat is installed more rearward than the handlebar. The foot board is installed more rearward than the handlebar and lower than the handlebar. The foot board is installed more forward than the seat and lower than the seat.

The straddled electric vehicle includes a vehicle body frame, a housing member, and a rear wheel. The housing member is supported by the vehicle body frame. The housing member is disposed below the seat. The housing member houses, for example, a helmet or the like. Therefore, the housing member is relatively large. The rear wheel is disposed below the seat. The rear wheel is disposed below the housing member.

The straddled electric vehicle includes an electric motor and a battery. The electric motor propels the straddled electric vehicle. The electric motor drives, for example, the rear wheel. The battery supplies power to the electric motor. The battery is installed below the foot board.

In the straddled electric vehicle disclosed in JP 2010-228661 A, the battery is installed below the foot board. Therefore, the position of the battery is relatively low. Therefore, it is not easy to attach and detach the battery to and from the straddled electric vehicle.

The present invention has been made in view of such circumstances, and an object of the present invention is to provide a straddled electric vehicle that allows easy attachment and detachment of a battery to and from the straddled electric vehicle.

First, it has been studied to install a battery below a seat. The seat is installed higher than a foot board. Therefore, the position of the battery when the battery is installed below the seat is higher than the position of the battery when the battery is installed below the foot board. Therefore, when the battery is installed below the seat, it is easy to attach and detach the battery to and from the straddled electric vehicle.

A housing member is installed below the seat. The housing member is relatively large. Thus, a first problem arises when the battery is installed below the seat. The first problem is interference between the battery and the housing member.

Therefore, it has been studied to reduce the size of the housing member. For convenience, the housing member changed to a small size is referred to as a "small housing member". Then, it has been studied to install the battery and the small housing member below the seat. For example, it has been studied to dispose the battery below a seat and in front of the small housing member. When the battery and the small housing member are installed below the seat, it is easy to prevent interference between the battery and the housing member. That is, the first problem is solved by reducing the size of the housing member. When the battery and the small housing member are installed below the seat, the first problem is solved.

When the battery and the small housing member are installed below the seat, the battery is installed outside the small housing member. When the battery is installed outside the small housing member, the battery is exposed to pebbles and mud. In particular, when the battery is disposed below the seat, the battery is disposed above the rear wheel. The rear wheel scatters pebbles and mud upward. Therefore, when the battery and the small housing member are installed below the seat, the battery is easily hit by pebbles or mud. The battery is easily damaged by pebbles and mud. The battery is easily defaced and damaged by pebbles and mud. In short, a second problem arises when the battery and the small housing member are installed below the seat. The second problem is that the battery is exposed to pebbles and mud.

Therefore, it has been studied to enlarge the size of the housing member. For example, it has been studied to make the housing member large enough to house the helmet and the battery. Then, it has been studied to install at least part of the battery in the internal space of the housing member. The housing member blocks pebbles and mud. Therefore, when at least part of the battery is installed in the internal space of the housing member, the battery is not exposed to pebbles or mud. When at least part of the battery is installed in the internal space of the housing member, the housing member protects the battery from pebbles and mud. Therefore, the battery is less likely damaged. The battery is less likely defaced and damaged. In short, when at least part of the battery is installed in the internal space of the housing member, the second problem is solved.

The housing member is supported by the vehicle body frame. For example, the housing member is rigidly fixed to the vehicle body frame. For example, the housing member is in direct contact with the vehicle body frame. Therefore, the housing member vibrates substantially integrally with the vehicle body frame. Therefore, the housing member may vibrate relatively strongly. When at least part of the battery is installed in the internal space of the housing member, the battery is supported by the housing member, for example. Therefore, when at least part of the battery is installed in the internal space of the housing member, the battery may also vibrate relatively strongly. If the battery vibrates too strongly, the battery may fail. In short, a third problem arises when at least part of the battery is installed in the internal space of the housing member. The third problem is that the battery may vibrate strongly. In other words, the third problem is that the acceleration applied to the battery may increase. The third problem is that the battery may be subjected to a large impact.

Therefore, it has been studied to mount the housing member on the vehicle body frame via an elastic member. For convenience, a structure in which the housing member is supported by the vehicle body frame via the elastic member is referred to as a "first structure". In the first structure, the elastic member is installed between the housing member and the vehicle body frame. In the first structure, the elastic member connects the housing member and the vehicle body frame. In the first structure, the housing member is not in direct contact with the vehicle body frame. Therefore, at first glance, it is assumed that the first structure sufficiently reduces the vibration of the housing member. Therefore, at first glance, it is assumed that the first structure sufficiently reduces the vibration of the battery.

However, it has been difficult for the first structure to sufficiently reduce the vibration of the battery. Also in the first structure, the battery may vibrate strongly. In short, when the battery is installed in the internal space of the housing member, the first structure does not solve the third problem.

### Description of the invention

Therefore, studies for solving the third problem have been further conducted. The present invention is based on these studies. The present invention is constituted as stated below.

That is, the present invention provides a straddled electric vehicle including:
a vehicle body frame;
a seat;
a housing member supported by the vehicle body frame and installed below the seat;
an electric motor that propels the straddled electric vehicle;
a battery that supplies power to the electric motor, wherein the battery is installed below the seat, and at least part of the battery is installed in an internal space of the housing member; and
a battery case that supports the battery;
wherein the battery case is supported by the housing member via an elastic member.

The straddled electric vehicle includes an electric motor, a battery, and a seat. The electric motor propels the straddled electric vehicle. The battery supplies power to the electric motor. The battery is installed below the seat. Therefore, the position of the battery is relatively high. Therefore, it is easy to attach and detach the battery to and from the straddled electric vehicle.

The straddled electric vehicle includes a housing member. A housing member is installed below the seat. The housing member blocks pebbles and mud. At least part of the battery is installed in the internal space of the housing member. Therefore, the battery is not exposed to pebbles or mud. The housing member protects the battery from pebbles and mud. Therefore, the battery is less likely damaged. The battery is less likely defaced and damaged.

The straddled electric vehicle includes a vehicle body frame and a battery case. The housing member is supported by the vehicle body frame. The battery case is supported by the housing member. The battery is supported by the battery case. Here, the battery case is supported by the housing member via an elastic member. Specifically, the straddled electric vehicle includes the elastic member. The elastic member is installed between the housing member and the battery case. The elastic member connects the housing member and the battery case. The housing member supports the battery case via the elastic member. The battery case is mounted on the housing member via the elastic member. Therefore, the elastic member reduces vibration of the battery case. For example, the vibration is transmitted from the vehicle body frame to the housing member. The vibration is transmitted from the housing member to the battery case. Further, the vibration is transmitted from the battery case to the battery. The elastic member reduces vibration transmitted from the housing member to the battery case without reducing vibration transmitted from the vehicle body frame to the housing member. Therefore, the elastic member effectively reduces vibration of the battery case. Therefore, the vibration of the battery is effectively reduced. For example, the vibration of the battery does not become excessively strong. Even when the vehicle body frame vibrates strongly, the vibration of the battery does not become excessively strong. In other words, the acceleration applied to the battery does not become excessively large. The impact applied to the battery does not become excessively large. In short, the elastic member protects the battery from vibration. Therefore, the battery is less likely to fail.

As described above, the present straddled electric vehicle allows easy attachment and detachment of the battery to and from the straddled electric vehicle. Further, the straddled electric vehicle protects the battery from pebbles and mud. Further, the straddled electric vehicle sufficiently reduces vibration of the battery.

In the straddled electric vehicle described above,
it is preferred that
an entirety of the battery case overlaps the housing member in plan view of the straddled electric vehicle.

Therefore, the battery case is smaller than the housing member. The smaller the battery case, the easier it is to control the vibration of the battery case. Therefore, the elastic member more effectively reduces vibration of the battery case. Therefore, the elastic member more effectively reduces vibration of the battery.

In the straddled electric vehicle described above,
it is preferred that
when the battery is supported by the battery case, the entirety of the battery overlaps the housing member in plan view of the straddled electric vehicle.

Therefore, the battery is smaller than the housing member. Therefore, the elastic member more effectively reduces vibration of the battery.

In the straddled electric vehicle described above,
it is preferred that
the entirety of the battery case overlaps the housing member in side view of the straddled electric vehicle.

Therefore, the battery case is even smaller than the housing member. Therefore, the elastic member more effectively reduces vibration of the battery.

In the straddled electric vehicle described above,
it is preferred that
at least part of the battery case is installed in the internal space of the housing member.

As described above, the housing member blocks pebbles and mud. At least part of the battery case is installed in the internal space of the housing member. Therefore, the battery case is not exposed to pebbles or mud. The housing member protects the battery case from pebbles and mud. Therefore, the battery case is less likely damaged. The battery case is less likely defaced and damaged.

In the straddled electric vehicle described above,
it is preferred that
an entirety of the elastic member overlaps the housing member in plan view of the straddled electric vehicle.

Therefore, the elastic member suitably connects the housing member and the battery case.

In the straddled electric vehicle described above,
it is preferred that
at least part of the elastic member is installed in the internal space of the housing member.

As described above, the housing member blocks pebbles and mud. At least part of the elastic member is installed in the internal space of the housing member. Therefore, the elastic member is not exposed to pebbles or mud. The housing member protects the elastic member from pebbles and mud. Therefore, the elastic member is less likely damaged. The elastic member is less likely defaced and damaged.

In the straddled electric vehicle described above,
it is preferred that
the straddled electric vehicle includes an electric component supported by the battery case.

As described above, the elastic member effectively reduces vibration of the battery case. The electric component is supported by the battery case. Therefore, the vibration of the electric component is also effectively reduced. Accordingly, the vibration of the electric component is not excessively strong. In short, the elastic member protects the electric component from vibration. Thus, the electric component is less likely to fail.

In the straddled electric vehicle described above,
it is preferred that
an entirety of the electric component overlaps the housing member in plan view of the straddled electric vehicle.

Therefore, the electric component is smaller than the housing member. Therefore, the elastic member more effectively reduces vibration of the electric component.

In the straddled electric vehicle described above,
it is preferred that
at least part of the electric component is installed in the internal space of the housing member.

As described above, the housing member blocks pebbles and mud. At least part of the electric component is installed in the internal space of the housing member. Therefore, the electric component is not exposed to pebbles or mud. The housing member protects the electric component from pebbles and mud. Therefore, the electric component is less likely damaged. The electric component is less likely defaced and damaged.

In the straddled electric vehicle described above,
it is preferred that
the battery is disposed in an internal space of the battery case, and
the electric component is disposed the outside the battery case.

The battery is disposed in the internal space of the battery case. Therefore, the battery case suitably supports the battery. The electric component is disposed outside of the battery case. That is, the battery and the electric component are separated from each other by the battery case. Therefore, it is easy to reduce the influence of the battery and the electric component on each other. For example, the battery case protects the electric component from the battery. For example, the battery case protects the battery from the electric component.

In the straddled electric vehicle described above,
it is preferred that
the housing member includes a luggage room for putting luggage, and
the battery case is disposed between the electric component and the luggage room.

The housing member has the luggage room for putting luggage. Therefore, the housing member is large. It is more difficult to control the vibration of the housing member as the housing member becomes larger. However, the battery case is supported by the housing member via the elastic member. Therefore, even when the housing member is large, the elastic member effectively reduces vibration of the battery case. Therefore, even when the housing member is large, the straddled electric vehicle sufficiently reduces the vibration of the battery.

The battery case is disposed between the electric component and the luggage room. That is, the electric component and the luggage are separated from each other by the battery case. Therefore, the battery case prevents interference between the electric component and the luggage. Accordingly, the battery case protects the electric component from the luggage.

In the straddled electric vehicle described above,
it is preferred that
the battery case is disposed behind the electric component and in front of the luggage room, and
the entirety of the electric component overlaps the battery case in front view of the straddled electric vehicle.

The battery case more reliably prevents interference between the electric component and the luggage.

In the straddled electric vehicle described above,
it is preferred that
the housing member includes an upper opening formed at an upper part of the housing member,
the seat is configured to open and close the upper opening,
the battery case has an insertion opening for inserting the battery into the battery case, the insertion opening being formed on an upper part of the battery case,
the straddled electric vehicle includes a lid installed below the seat and above the battery case,
the lid is configured to open and close the insertion opening,
when the seat closes the upper opening, an entirety of the insertion opening overlaps the seat in plan view of the straddled electric vehicle, and
when the lid closes the insertion opening, the entirety of the insertion opening overlaps the lid in plan view of the straddled electric vehicle.

The seat covers the insertion opening of the battery case. The lid covers the insertion opening of the battery case. In summary, the insertion opening is doubly covered by the seat and the lid. Therefore, each of the seat and the lid suitably protects the battery supported by the battery case.

In the straddled electric vehicle described above,
it is preferred that
when the seat closes the upper opening, the entirety of the battery supported by the battery case overlaps the seat in plan view of the straddled electric vehicle, and
when the lid closes the insertion opening, the entirety of the battery supported by the battery case overlaps the lid in plan view of the straddled electric vehicle.

The seat covers the battery supported by the battery case. The lid covers the battery supported by the battery case. In summary, the battery supported by the battery case is doubly covered by the seat and the lid. Therefore, each of the seat and the lid suitably protects the battery supported by the battery case.

In the straddled electric vehicle described above,
it is preferred that
the straddled electric vehicle includes a connector electrically connected to the battery supported by the battery case, and
the connector is supported by the battery case.

As described above, the elastic member effectively reduces vibration of the battery case. The connector is supported by the battery case. Therefore, the vibration of the connector is also effectively reduced. Accordingly, the vibration of the connector is not excessively strong. In short, the elastic member protects the connector from vibration. Thus, the connector is less likely to fail. Further, both the battery and the connector are supported by the battery case. Therefore, when the battery is supported by the battery case, a difference between vibration of the battery and vibration of the connector is small. Therefore, when the battery is supported by the battery case, it is easy to maintain the electrical connection between the battery and the connector.

In the straddled electric vehicle described above,
it is preferred that
the entirety of the connector overlaps the housing member in plan view of the straddled electric vehicle.

Therefore, the connector is smaller than the housing member. Therefore, the elastic member more effectively reduces vibration of the connector.

In the straddled electric vehicle described above,
it is preferred that
at least part of the connector is installed in an internal space of the housing member.

As described above, the housing member blocks pebbles and mud. At least part of the connector is installed in the internal space of the housing member. Therefore, the connector is not exposed to pebbles or mud. The connector protects the electric component from pebbles and mud. Therefore, the connector is less likely damaged. The connector is less likely defaced and damaged.

In the straddled electric vehicle described above,
it is preferred that
the straddled electric vehicle includes a pressing member that presses the battery supported by the battery case against the connector, and
the lid is supported by the battery case,
the pressing member is supported by the lid,
the connector is installed at a lower part of the battery case, and
when the lid closes the insertion opening of the battery case, the pressing member presses the battery supported by the battery case downward.

The pressing member presses the battery supported by the battery case against the connector. Therefore, when the battery is supported by the battery case, the pressing member suitably maintains the electrical connection between the battery and the connector. The pressing member is supported by the lid. As described above, the lid is installed above the battery case. Therefore, when the lid closes the insertion opening of the battery case, the lid and each of the pressing members are respectively located above the battery supported by the battery case. Therefore, when the lid closes the insertion opening of the battery case, it is easy for the pressing member to press the battery supported by the battery case downward. The connector is installed at a lower part of the battery case. Therefore, pressing the battery supported by the battery case downward corresponds to pressing the battery supported by the battery case against the connector. Therefore, when the lid closes the insertion opening of the battery case, it is easy for the pressing member to press the battery supported by the battery case against the connector. As described above, the elastic member effectively reduces vibration of the battery case. The lid is supported by the battery case. Therefore, the vibration of the lid is effectively reduced. Accordingly, the vibration of the lid is not excessively strong. The pressing member is supported by the lid. The pressing member is supported by the battery case via the lid. Therefore, the vibration of the pressing member is also effectively reduced. Accordingly, the vibration of the pressing member is not excessively strong. Therefore, even when the pressing member presses the battery supported by the battery case, the vibration of the battery does not become excessively strong. In short, even when the pressing member presses the battery supported by the battery case, the elastic member protects the battery from vibration.

In the straddled electric vehicle described above,
it is preferred that
when the lid closes the insertion opening of the battery case, the entirety of the lid overlaps the housing member in plan view of the straddled electric vehicle.

Therefore, the lid is smaller than the housing member. Therefore, the elastic member more effectively reduces vibration of the lid.

In the straddled electric vehicle described above,
it is preferred that
when the lid closes the insertion opening of the battery case, the entirety of the pressing member overlaps the housing member in plan view of the straddled electric vehicle.

Therefore, the pressing member is smaller than the housing member. Therefore, the elastic member more effectively reduces vibration of the pressing member.

In the straddled electric vehicle described above,
it is preferred that
when the seat closes the upper opening, the seat seals the upper opening via a seal member.

Thus, when the seat closes the upper opening, the seat prevents water from entering the internal space of the housing member. Therefore, the battery case does not need to include a structure for protecting the battery supported by the battery case from water. Therefore, it is easy to simplify the structure of the battery case.

### Brief description of the drawings[0042]

For the purpose of illustrating the invention, there are shown in the drawings several forms which are presently preferred, it being understood, however, that the invention is not limited to the precise arrangement and instrumentalities shown.
FIG. 1 is a left side view of a straddled electric vehicle according to an embodiment;
FIG. 2 is a side view of part of the straddled electric vehicle;
FIG. 3 is a side view of part of the straddled electric vehicle;
FIG. 4 is a perspective view of a vehicle body frame;
FIG. 5 is a perspective view of the vehicle body frame and a housing member;
FIG. 6 is a plan view of the vehicle body frame and the housing member;
FIG. 7 is a cross-sectional view taken along line VII-VII of FIG. 2;
FIG. 8 is an exploded perspective view of part of the straddled electric vehicle;
FIG. 9 is a side view of a battery case;
FIG. 10 is an enlarged plan view of part of the straddled electric vehicle;
FIG. 11 is a cross-sectional view taken along line XI-XI of FIG. 6;
FIG. 12 is a front view of the battery case and an electric component;
FIG. 13 is an enlarged side view of a lid; and
FIG. 14 is a diagram for explaining a vibration transmission path.

### Embodiments of the invention [0043]

A straddled electric vehicle 1 according to the present invention will be described hereinafter with reference to the drawings.

### 1. Schematic Configuration of Straddled Electric Vehicle 1

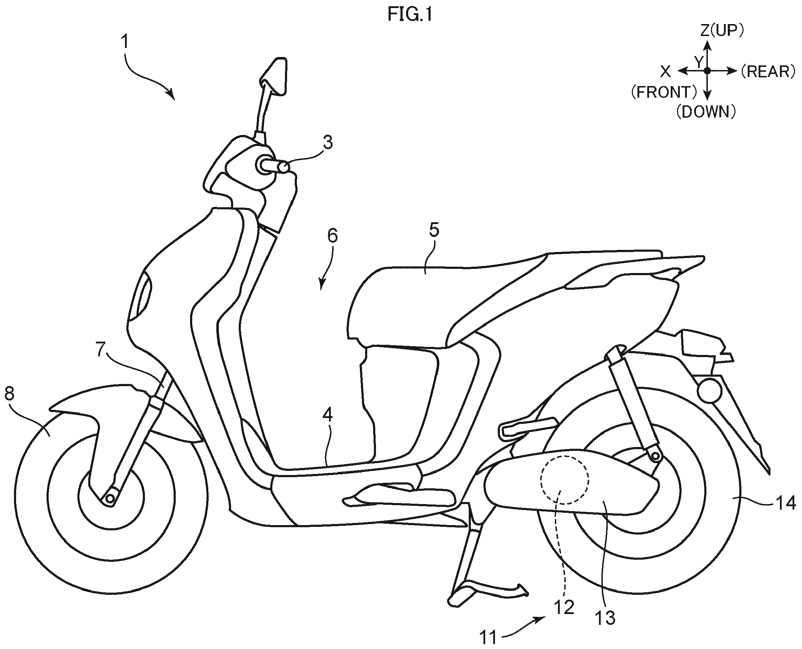

FIG. 1 is a left side view of a straddled electric vehicle 1 according to an embodiment. A schematic configuration of the straddled electric vehicle 1 will be described. The straddled electric vehicle 1 is classified as a scooter-type vehicle, for example.

FIG. 1 shows a longitudinal direction X, a transverse direction Y, and an up-down direction Z of the straddled electric vehicle 1. The longitudinal direction X, transverse direction Y, and up-down direction Z are defined with reference to a driver (also called a rider) riding on the straddled electric vehicle 1. The longitudinal direction X, transverse direction Y, and up-down direction Z are perpendicular to one another. The longitudinal direction X and transverse direction Y are horizontal. The up-down direction Z is vertical.

The terms "forward", "rearward", "upward", "downward", "rightward", and "leftward", respectively, mean "forward", "rearward", "upward", "downward", "rightward", and "leftward" as seen from the driver mounted on the straddled electric vehicle 1. Unless otherwise stated in this specification, "forward" and "rearward" include not only directions parallel to the longitudinal direction X but also directions close to the longitudinal direction X. The directions close to the longitudinal direction X are, for example, directions at angles not exceeding 45 degrees to the longitudinal direction X. Similarly, unless otherwise specified, "rightward" and "leftward" include not only directions parallel to the transverse direction Y but also directions close to the transverse direction Y. Unless otherwise specified, "upward" and "downward" include not only directions parallel to the up-down direction Z but also directions close to the up-down direction Z. For reference, the drawings show the terms FRONT, REAR, UP, DOWN, RIGHT, and LEFT, as appropriate.

In the present specification, "in side view of the straddled electric vehicle 1" is appropriately referred to as "in vehicle side view". "In plan view of the straddled electric vehicle 1" is appropriately referred to as "in vehicle plan view". "In front view of the straddled electric vehicle 1" is appropriately referred to as "in vehicle front view".

The straddled electric vehicle 1 includes a handlebar 3, a foot board 4 and a seat 5. The handlebar 3 is disposed at a front part of the straddled electric vehicle 1. The foot board 4 is disposed more rearward than the handlebar 3. The foot board 4 is disposed lower than the handlebar 3. The seat 5 is disposed more rearward than the foot board 4. The seat 5 is disposed higher than the foot board 4. A driver of the straddled electric vehicle 1 grips the handlebar 3 with the driver's hands. The driver places his or her feet on the foot board 4. The driver sits on the seat 5.

The straddled electric vehicle 1 forms a recessed space 6. The recessed space 6 is an unoccupied space. The straddled electric vehicle 1 does not have a part existing in the recessed space 6. The recessed space 6 is located behind the handlebar 3. The recessed space 6 is located above the foot board 4. The recessed space 6 is located in front of the seat 5. The recessed space 6 is opened upward. The recessed space 6 extends downward. The recessed space 6 extends to a position lower than the handlebar 3 and the seat 5. The recessed space 6 allows the driver to easily get on and off the straddled electric vehicle 1. For example, the driver easily gets on and off the straddled electric vehicle 1 by passing the driver's legs through the recessed space 6.

The straddled electric vehicle 1 includes a front fork 7, and a front wheel 8. The front fork 7 is connected to the handlebar 3. The front fork 7 extends downward and forward from the handlebar 3. The front wheel 8 is supported by a lower part of the front fork 7.

The straddled electric vehicle 1 includes a power unit 11 and a rear wheel 14. The power unit 11 is disposed below the seat 5, for example. The rear wheel 14 is connected to the power unit 11. The rear wheel 14 is disposed below the seat 5.

The power unit 11 includes an electric motor 12. The electric motor 12 propels the straddled electric vehicle 1. Specifically, the electric motor 12 converts the electric energy into mechanical energy for propulsion of the straddled electric vehicle 1. The electric motor 12 rotationally drives the rear wheel 14.

The power unit 11 includes a case 13. The case 13 houses the electric motor 12. The case 13 supports, for example, the rear wheel 14.

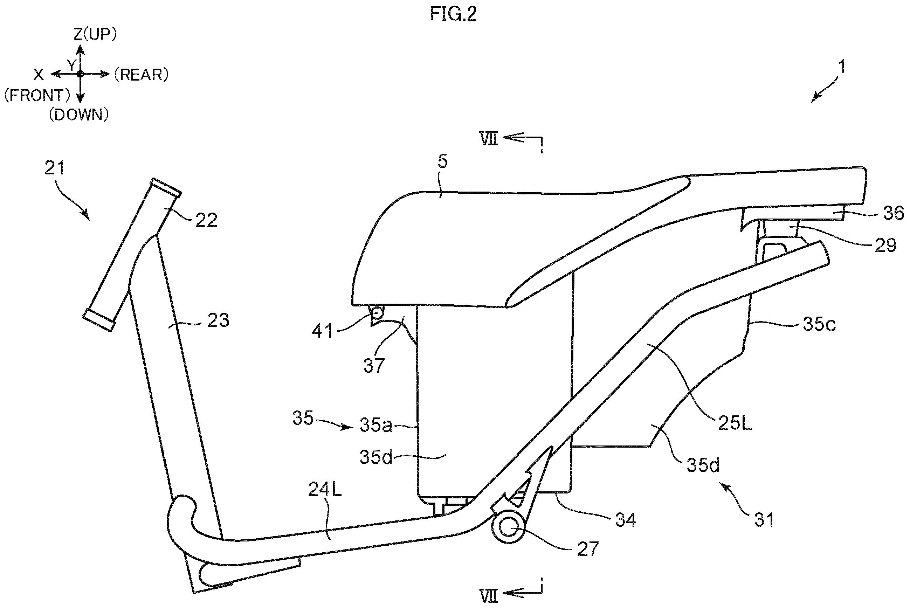

FIG. 2 is a side view of part of the straddled electric vehicle 1. The straddled electric vehicle 1 includes a vehicle body frame 21 and a housing member 31. The housing member 31 is installed below the seat 5. For example, the entirety of the housing member 31 is installed below the entirety of the seat 5. Although not illustrated, the housing member 31 is disposed above the rear wheel 14.

The housing member 31 is supported by the vehicle body frame 21. The front fork 7, the foot board 4, and the power unit 11 described above are also supported by the vehicle body frame 21. The power unit 11 is swingable with respect to the vehicle body frame 21, for example. The electric motor 12 is swingable with respect to the vehicle body frame 21, for example.

The seat 5 is supported by the housing member 31. For example, the straddled electric vehicle 1 includes a hinge shaft 41. The hinge shaft 41 is supported by the housing member 31. The hinge shaft 41 extends in the transverse direction Y. The seat 5 is supported by the hinge shaft 41.

The seat 5 is rotatable about the hinge shaft 41 with respect to the housing member 31. The seat 5 is movable between a closed position and an opened position.

FIGS. 1 and 2 show the seat 5 in the closed position. When the driver sits on the seat 5, the seat 5 is in the closed position.

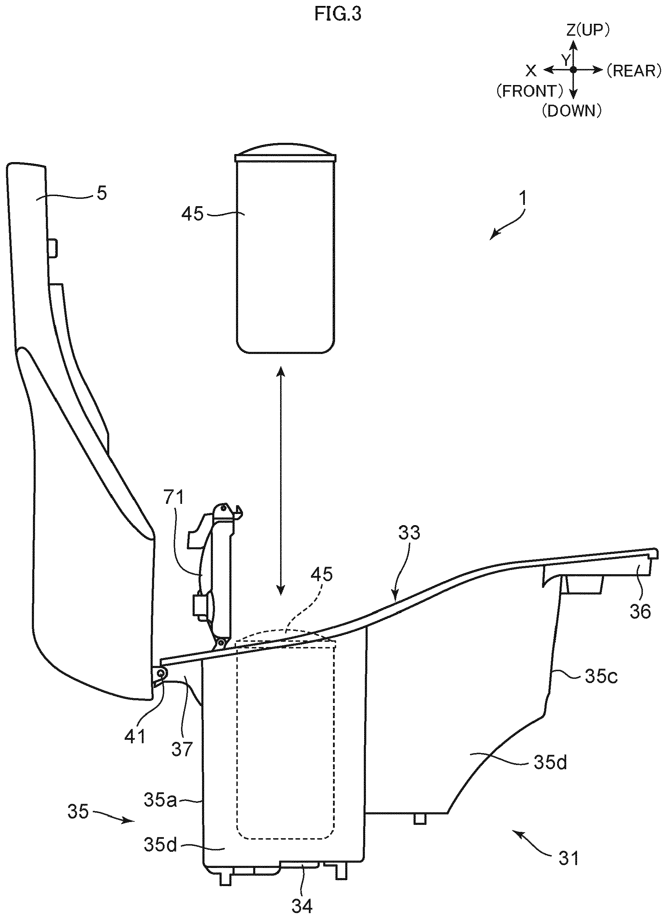

FIG. 3 is a side view of part of the straddled electric vehicle 1. FIG. 3 shows the seat 5 in the opened position. When the seat 5 is in the opened position, the housing member 31 is opened upward.

The straddled electric vehicle 1 includes a battery 45. The battery 45 stores electric energy. The battery 45 provides electric energy to the electric motor 12. The battery 45 supplies power to the electric motor 12. The battery 45 is, for example, a rechargeable secondary battery. The battery 45 is, for example, a lithium ion battery.

FIG. 3 illustrates the battery 45 mounted on the straddled electric vehicle 1 by a broken line. The position of the battery 45 mounted on the straddled electric vehicle 1 will be described. At least part of the battery 45 is installed inside the housing member 31. At least part of the battery 45 overlaps the housing member 31 in vehicle side view. The battery 45 is installed below the seat 5. For example, the entirety of the battery 45 is installed below the entirety of the seat 5. Although not illustrated, at least part of the battery 45 is disposed at a position higher than the foot board 4. At least part of the battery 45 is disposed at a position higher than the rear wheel 14.

FIG. 3 illustrates the battery 45 detached from the straddled electric vehicle 1 by a solid line. The battery 45 is classified as a portable type. The battery 45 is detachable from the straddled electric vehicle 1. When the battery 45 is removed from the straddled electric vehicle 1, the entirety of the battery 45 is located outside the housing member 31.

When the seat 5 is in the opened position, the seat 5 allows the battery 45 to move between the inside of the housing member 31 and the outside of the housing member 31. When the seat 5 is in the opened position, the battery 45 can be removed from the straddled electric vehicle 1. When the seat 5 is in the opened position, the battery 45 can be attached to the straddled electric vehicle 1. When the seat 5 is in the opened position, the battery 45 can be replaced with another battery.

### 2. Vehicle Body Frame 21, Housing Member 31, and Seat 5

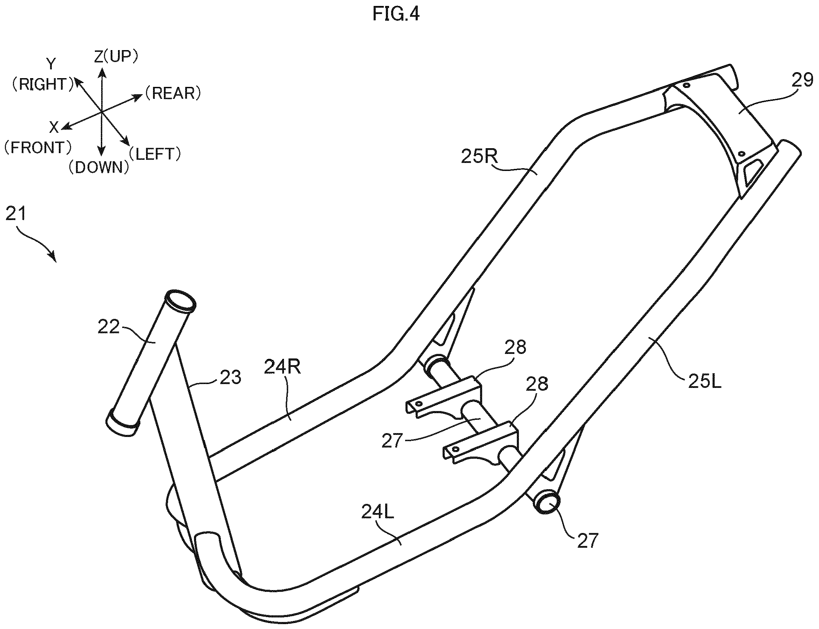

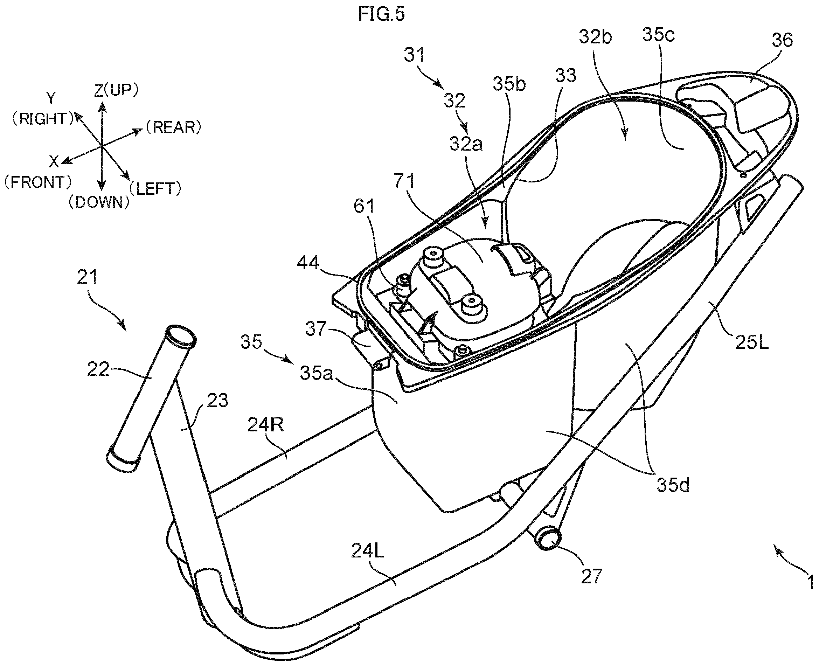

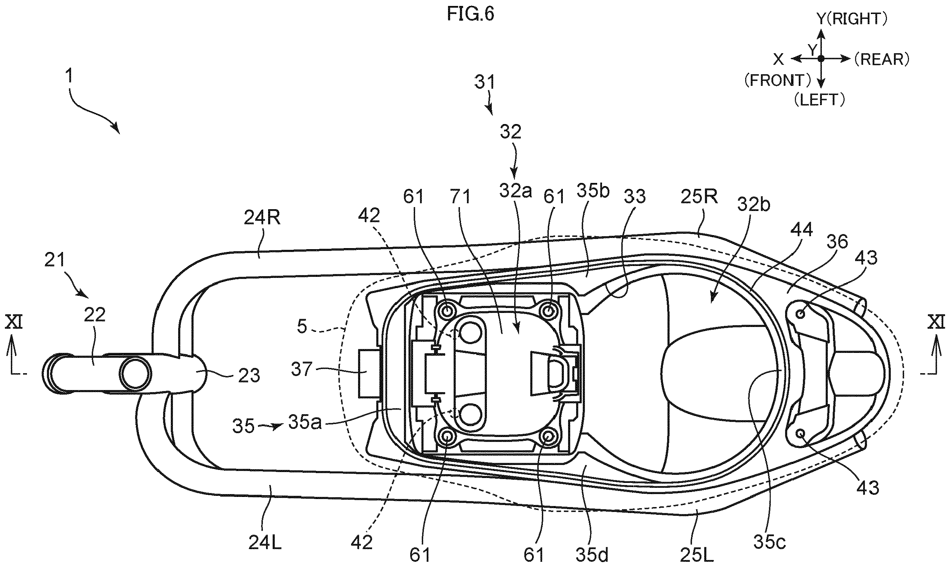

Refer to FIG. 2 and FIGS. 4 to 6. FIG. 4 is a perspective view of the vehicle body frame 21. FIG. 5 is a perspective view of the vehicle body frame 21 and a housing member 31. FIG. 6 is a plan view of the vehicle body frame 21 and the housing member 31. The vehicle body frame 21 will be described.

The vehicle body frame 21 includes a head pipe 22, a down frame 23, a right lower frame 24R, and a left lower frame 24L. The head pipe 22 supports the front fork 7. The down frame 23 is connected to the head pipe 22. The down frame 23 extends downward from the head pipe 22. The right lower frame 24R and the left lower frame 24L are connected to the down frame 23. The right lower frame 24R and the left lower frame 24L extend rearward from the down frame 23. The left lower frame 24L is disposed leftward of the right lower frame 24R. The left lower frame 24L overlaps the right lower frame 24R in vehicle side view. The right lower frame 24R and the left lower frame 24L support the foot board 4, for example.

The vehicle body frame 21 includes a right seat frame 25R and a left seat frame 25L. The right seat frame 25R is connected to the right lower frame 24R. The right seat frame 25R extends rearward and upward from the right lower frame 24R. The left seat frame 25L is connected to the left lower frame 24L. The left seat frame 25L extends rearward and upward from the left lower frame 24L. The left seat frame 25L is disposed leftward of the right seat frame 25R. The left seat frame 25L overlaps the right seat frame 25R in vehicle side view. The right seat frame 25R and the left seat frame 25L support the power unit 11, for example.

The vehicle body frame 21 includes a front cross frame 27, two stays 28, and a rear cross frame 29. The front cross frame 27 is supported by the right seat frame 25R and the left seat frame 25L. The stays 28 are supported by the front cross frame 27. The rear cross frame 29 is disposed more rearward than the front cross frame 27 and the stays 28. The rear cross frame 29 is disposed higher than the front cross frame 27 and the stays 28. The rear cross frame 29 is supported by the right seat frame 25R and the left seat frame 25L.

Refer to FIG. 2. The seat 5 is disposed at a position higher than the right seat frame 25R and the left seat frame 25L. The housing member 31 overlaps the right seat frame 25R and the left seat frame 25L in vehicle side view.

Refer to FIG. 6. The housing member 31 is disposed between the right seat frame 25R and the left seat frame 25L. The housing member 31 is disposed leftward of the right seat frame 25R. The housing member 31 is disposed rightward of the left seat frame 25L.

The housing member 31 is supported by the right seat frame 25R and the left seat frame 25L. For example, the housing member 31 is supported by the stays 28 and the rear cross frame 29.

The housing member 31 is fixed to the vehicle body frame 21. The housing member 31 is rigidly mounted on the vehicle body frame 21.

For example, the straddled electric vehicle 1 includes fastening members 42 and fastening members 43. In FIG. 6, each of the fastening members 42 is indicated by a broken line. Each of the fastening members 42 and fastening members 43 fastens the housing member 31 to the vehicle body frame 21. Each of the fastening members 42 fastens the housing member 31 to the stay 28. Each of the fastening member 43 fastens housing member 31 to rear cross frame 29. The fastening members 42 and fastening members 43 are, for example, bolts.

The housing member 31 is in direct contact with the vehicle body frame 21. For example, the housing member 31 contacts the stays 28 and the rear cross frame 29.

Refer to FIG. 3, FIG. 5, and FIG. 6. The housing member 31 has a box shape opened upward. The housing member 31 blocks pebbles and mud. The housing member 31 blocks, for example, pebbles and mud rolled up by the rear wheel 14.

The housing member 31 has an internal space 32 and an upper opening 33. The internal space 32 is formed inside the housing member 31. The upper opening 33 is formed at an upper part of the housing member 31. The upper opening 33 corresponds to the upper surface of the internal space 32.

At least part of the battery 45 is installed in the internal space 32. The battery 45 can pass through the upper opening 33. The battery 45 is movable between the internal space 32 and the outside of the housing member 31 through the upper opening 33.

Furthermore, the housing member 31 can house luggage. Therefore, the housing member 31 is large. The luggage is, for example, a helmet. The luggage is movable between the internal space 32 and the outside of the housing member 31 through the upper opening 33.

The internal space 32 includes a battery chamber 32a and a luggage room 32b. The battery chamber 32a is a space for placing the battery 45. The luggage room 32b is a space for putting luggage. The luggage room 32b is disposed behind the battery chamber 32a, for example.

The housing member 31 includes a bottom 34, a peripheral wall 35, a flange 36, and a support 37. The peripheral wall 35 is connected to the bottom 34. The peripheral wall 35 extends upward from the bottom 34. The peripheral wall 35 includes, for example, a front wall 35a, a right wall 35b, a rear wall 35c, and a left wall 35d. The flange 36 is disposed behind the peripheral wall 35. The flange 36 is connected to the rear wall 35c. The flange 36 extends rearward from the rear wall 35c. The support 37 is disposed in front of the peripheral wall 35. The support 37 is connected to the front wall 35a. The support 37 extends forward from the front wall 35a.

The bottom 34 and the flange 36 are supported by the vehicle body frame 21. The bottom 34 is placed on the stays 28. The bottom 34 is supported by the stays 28. The flange 36 is placed on the rear cross frame 29. The flange 36 is supported by the rear cross frame 29.

The support 37 supports the hinge shaft 41.

The internal space 32 is defined by the bottom 34 and the peripheral wall 35. The internal space 32 is located above the bottom 34. The internal space 32 is located inside the peripheral wall 35. The internal space 32 is surrounded by the peripheral wall 35.

The upper opening 33 is defined by the peripheral wall 35. The upper opening 33 is defined by the upper edge of the peripheral wall 35.

The straddled electric vehicle 1 includes a seal member 44. The seal member 44 is attached to the housing member 31. The seal member 44 is attached to the upper edge of the peripheral wall 35. The seal member 44 has a string shape or a band shape. The seal member 44 has an annular shape. The seal member 44 surrounds the upper opening 33 in vehicle plan view. The seal member 44 is made of, for example, rubber or synthetic resin.

FIG. 6 shows the seat 5 in the closed position by a broken line. When the seat 5 is in the closed position, the entirety of the upper opening 33 overlaps the seat 5 in vehicle plan view. That is, when the seat 5 is in the closed position, the seat 5 closes the upper opening 33. "When the seat 5 is in the closed position" is synonymous with "when the seat 5 closes the upper opening 33". When the seat 5 is in the opened position, at least part of the upper opening 33 does not overlap the seat 5 in vehicle plan view. That is, when the seat 5 is in the opened position, the seat 5 opens the upper opening 33. "When the seat 5 is in the opened position" is synonymous with "when the seat 5 opens the upper opening 33". To sum up, the seat 5 is configured to open and close the upper opening 33.

Further, when the seat 5 is in the closed position, the entirety of the housing member 31 overlaps the seat 5 in vehicle plan view. Further, when the seat 5 is in the closed position, the entirety of the seal member 44 overlaps the seat 5 in vehicle plan view.

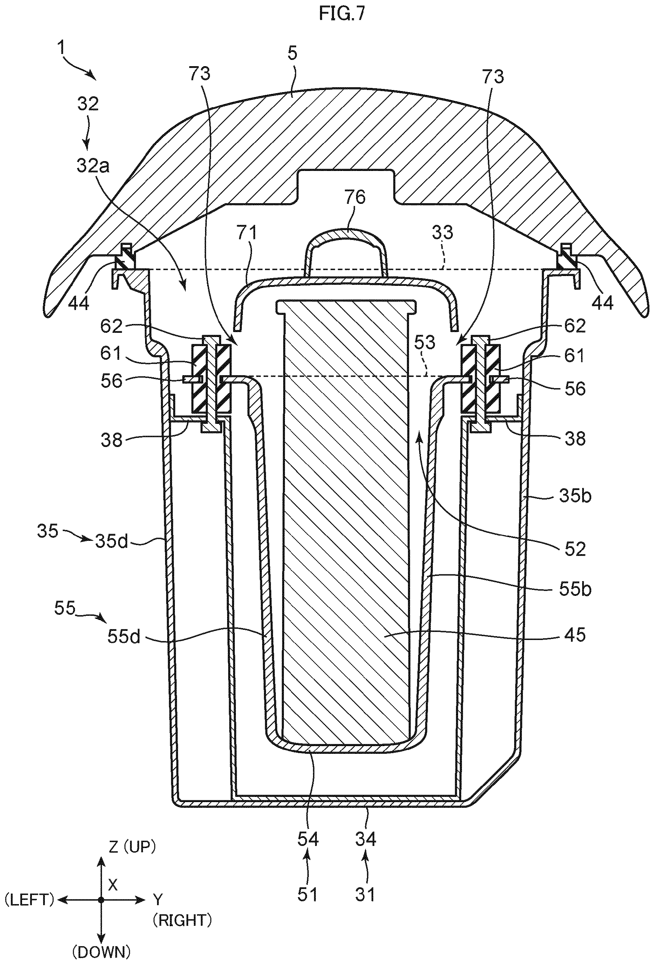

FIG. 7 is a cross-sectional view taken along line VII-VII of FIG. 2. FIG. 7 does not illustrate the vehicle body frame 21. FIG. 7 shows the seat 5 in the closed position. FIG. 7 illustrates the battery 45 mounted on the straddled electric vehicle 1. When the seat 5 is in the closed position, the entirety of the housing member 31 is positioned below the seat 5. When the seat 5 is in the closed position, the entirety of the battery 45 mounted on the straddled electric vehicle 1 is positioned below the seat 5.

When the seat 5 is in the closed position, the seat 5 prohibits the battery 45 from moving between the internal space 32 and the outside of the housing member 31. When the seat 5 is in the closed position, the seat 5 prohibits the luggage from moving between the internal space 32 and the outside of the housing member 31.

When the seat 5 is in the closed position, the seal member 44 comes into contact with the seat 5. When the seat 5 is in the closed position, the seat 5 and the housing member 31 come into close contact with each other via the seal member 44. When the seat 5 is in the closed position, the seat 5 seals the upper opening 33 via the seal member 44. When the seat 5 is in the closed position, the seal member 44 seals a gap between the seat 5 and the housing member 31. When the seat 5 is in the closed position, the seal member 44 blocks the internal space 32 from the outside of the housing member 31. When the seat 5 is in the closed position, the seal member 44 prohibits water from entering the internal space 32 from the outside of the housing member 31.

### 3. Battery Case 51 and Elastic Member 61

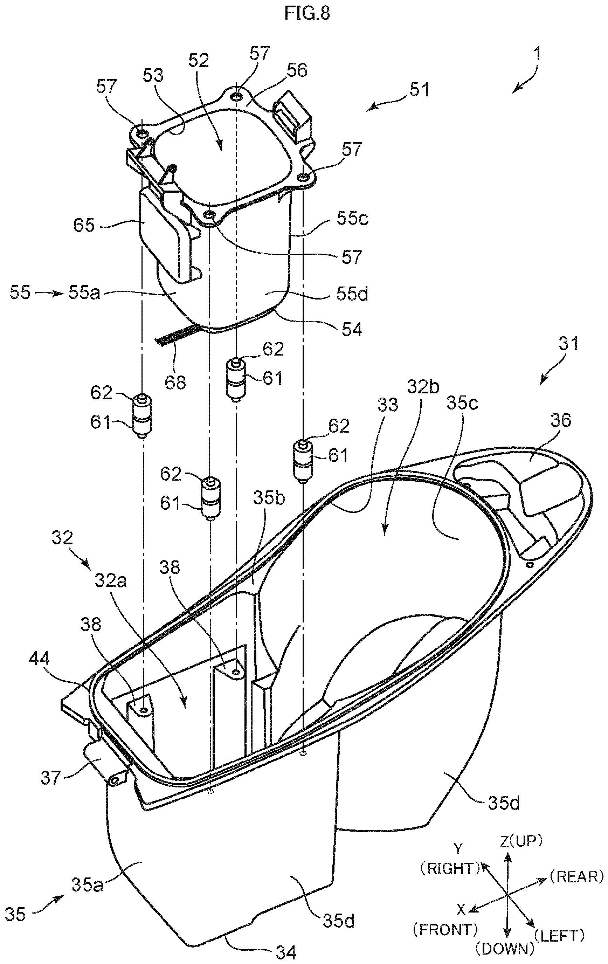

Refer to FIGS. 7 and 8. FIG. 8 is an exploded perspective view of part of the straddled electric vehicle 1. The straddled electric vehicle 1 includes a battery case 51. The battery case 51 supports the battery 45. The "battery 45 mounted on the straddled electric vehicle 1" is synonymous with the "battery 45 supported by the battery case 51".

The straddled electric vehicle 1 includes a plurality of elastic members 61. The number of the elastic members 61 is, for example, four. Each of the elastic members 61 is supported by the housing member 31. Each of the elastic members 61 supports the battery case 51. Each of the elastic members 61 connects the housing member 31 and the battery case 51. Each of the elastic members 61 is installed between the housing member 31 and the battery case 51.

The housing member 31 supports the battery case 51 via each of the elastic members 61. In other words, the battery case 51 is supported by the housing member 31 via each of the elastic members 61. The battery case 51 is mounted on the housing member 31 via each of the elastic members 61.

The battery case 51 will be described. The battery case 51 is disposed below the seat 5. For example, the entirety of the battery case 51 is installed below the entirety of the seat 5. When the seat 5 is in the closed position, the entirety of the battery case 51 is located below the seat 5.

At least part of the battery case 51 is installed in the internal space 32. For example, the entirety of the battery case 51 is installed in the internal space 32.

At least part of the battery case 51 is installed in the battery chamber 32a. For example, the entirety of the battery case 51 is installed in the battery chamber 32a.

The battery case 51 is installed in front of the luggage room 32b. For example, the entirety of the battery case 51 is installed in front of the entirety of the luggage room 32b.

The entirety of the battery case 51 is disposed above the bottom 34. The entirety of the battery 45 supported by the battery case 51 is also disposed above the bottom 34.

The battery case 51 is smaller than the housing member 31. For example, the length of the battery case 51 in the longitudinal direction X is shorter than the length of the housing member 31 in the longitudinal direction X. For example, the length of the battery case 51 in the transverse direction Y is shorter than the length of the housing member 31 in the transverse direction Y. For example, the length of the battery case 51 in the up-down direction Z is shorter than the length of the housing member 31 in up-down direction Z.

The battery case 51 has a box shape opened upward. For example, the battery case 51 has a tubular shape extending in the up-down direction Z. The battery case 51 houses the battery 45.

The battery case 51 has an internal space 52. The internal space 52 is formed inside the battery case 51. The internal space 52 extends in the up-down direction Z. For example, the length of the internal space 52 in the up-down direction Z is shorter than the length of the battery 45 in up-down direction Z.

The battery case 51 has an insertion opening 53 for inserting the battery 45 into the battery case 51. The insertion opening 53 is formed at an upper part of the battery case 51. The insertion opening 53 corresponds to the upper surface of the internal space 52.

The battery case 51 has a bottom 54 and a cylindrical body 55. The bottom 54 extends in a substantially horizontal direction. The cylindrical body 55 is connected to the bottom 54. The cylindrical body 55 extends upward from the bottom 54. The cylindrical body 55 includes, for example, a front wall 55a, a right wall 55b, a rear wall 55c, and a left wall 55d.

The internal space 52 is defined by the bottom 54 and the cylindrical body 55. The internal space 52 is located above the bottom 54. The internal space 52 is located inside the cylindrical body 55. The internal space 52 is surrounded by the cylindrical body 55.

The insertion opening 53 is defined by the cylindrical body 55. The insertion opening 53 is defined by the upper edge of the cylindrical body 55.

The battery 45 can pass through the insertion opening 53. The battery 45 is movable between the internal space 52 and the outside of the battery case 51 through the insertion opening 53. The battery case 51 allows the battery 45 to move in the internal space 52 with respect to the battery case 51.

When the battery 45 is supported by the battery case 51, the battery 45 is disposed in the internal space 52. When the battery 45 is supported by the battery case 51, at least part of the battery 45 is disposed in the internal space 52.

When the battery 45 is supported by the battery case 51, the battery 45 is placed on the bottom 54. When the battery 45 is supported by the battery case 51, the battery 45 comes into contact with the bottom 54. Further, when the battery 45 is supported by the battery case 51, the battery 45 may come into contact with the cylindrical body 55. Alternatively, when the battery 45 is supported by the battery case 51, the battery 45 may not come into contact with the cylindrical body 55.

The battery case 51 includes a flange 56 and a plurality of through holes 57. The flange 56 is connected to the cylindrical body 55. The flange 56 is connected to an upper part of the cylindrical body 55. The flange 56 is disposed at the same height position as the insertion opening 53, for example. The flange 56 extends outward from the cylindrical body 55. The entirety of the flange 56 is installed outside the internal space 52. The flange 56 does not include a part located in the internal space 52. The flange 56 has a substantially horizontal plate shape. The number of through holes 57 is, for example, four. The through holes 57 each are formed in the flange 56. The through holes 57 each penetrate the flange 56 in the up-down direction Z.

The housing member 31 includes a plurality of mounting seats 38. The number of the mounting seats 38 is, for example, four. The mounting seats 38 each are installed below the seat 5. When the seat 5 is in the closed position, the entirety of each of the mounting seats 38 is located below the seat 5. At least part of each of the mounting seats 38 is disposed in the internal space 32. At least part of each of the mounting seats 38 is disposed in the battery chamber 32a. At least part of each of the mounting seats 38 is disposed below the upper opening 33. The entirety of each of the mounting seats 38 is disposed above the bottom 34. For example, each of the mounting seats 38 is supported by the peripheral wall 35. Some of the mounting seats 38 are supported by the right wall 35b. The others of the mounting seats 38 are supported by the left wall 35d.

Each of the mounting seats 38 has a substantially horizontal plate shape. Each of the mounting seats 38 is disposed below the flange 56.

The elastic members 61 will be described. Each of the elastic members 61 is disposed below the seat 5. For example, the entirety of each of the elastic members 61 is installed below the entirety of the seat 5. When the seat 5 is in the closed position, the entirety of each of the elastic members 61 is located below the seat 5.

At least part of each of the elastic members 61 is installed in the internal space 32. For example, the entirety of each of the elastic members 61 is installed in the internal space 32.

At least part of each of the elastic members 61 is installed in the battery chamber 32a. For example, the entirety of each of the elastic members 61 is installed in the battery chamber 32a.

The entirety of each of the elastic members 61 is disposed above the bottom 34.

The entirety of each of the elastic members 61 is installed outside the internal space 52.

The elastic members 61 each are made of, for example, rubber or synthetic resin. The elastic members 61 each include lower rigidity than the vehicle body frame 21. The elastic members 61 each are more easily bent than the vehicle body frame 21. The elastic members 61 each have lower rigidity than the housing member 31. The elastic members 61 each are more easily bent than the housing member 31.

For example, each of the elastic members 61 has a cylindrical shape extending in the up-down direction Z. Each of the elastic members 61 has a hollow part and an outer peripheral surface.

Each of the elastic members 61 is placed on each of the mounting seats 38. The straddled electric vehicle 1 includes fastening members 62. Each of the fastening members 62 is inserted into the hollow part of each of the elastic members 61. Each of the fastening members 62 respectively fastens each of the elastic members 61 to each of the mounting seats 38. Each of the elastic members 61 is supported by each of the mounting seats 38.

Each of the mounting seats 38 is in contact with each of the elastic members 61. Each of the mounting seat 38 is in contact with each of the fastening members 62.

Each of the elastic members 61 extends upward from each of the mounting seats 38. Each of the elastic members 61 extends from each of the mounting seats 38 to a position higher than the flange 56. Each of the elastic members 61 extends from a position lower than the insertion opening 53 to a position higher than the insertion opening 53. Each of the elastic members 61 is inserted into each of the through holes 57. The flange 56 is fitted to the outer peripheral surface of each of the elastic members 61. The elastic members 61 each support the flange 56.

The flange 56 is in contact with the elastic members 61. The flange 56 is in contact with the outer peripheral surface of each of the elastic members 61. The contact position between the flange 56 and each of the elastic members 61 is substantially the same height as the insertion opening 53. The flange 56 is not in contact with each of the fastening members 62. The flange 56 is not in contact with each of the mounting seats 38.

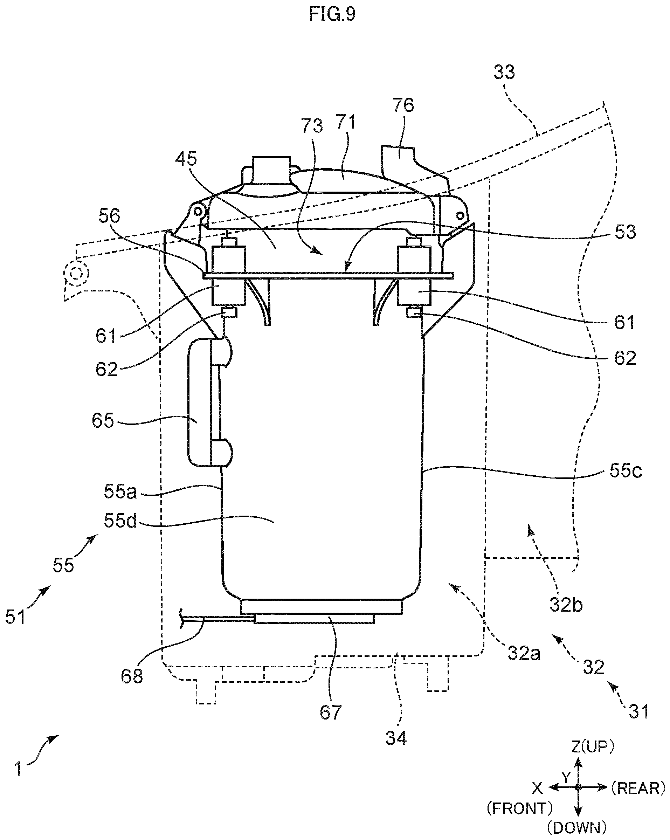

FIG. 9 is a side view of the battery case 51. In FIG. 9, the housing member 31 is indicated by a broken line. At least part of the battery case 51 overlaps the housing member 31 in vehicle side view. For example, the entirety of the battery case 51 overlaps the housing member 31 in vehicle side view.

At least part of the battery case 51 is disposed below the upper opening 33. For example, the entirety of the battery case 51 is disposed below the upper opening 33.

At least part of each of the elastic members 61 overlaps the housing member 31 in vehicle side view. For example, the entirety of each of the elastic members 61 overlaps the housing member 31 in vehicle side view.

At least part of each of the elastic members 61 is disposed lower than the upper opening 33. For example, the entirety of each of the elastic members 61 is disposed lower than the upper opening 33.

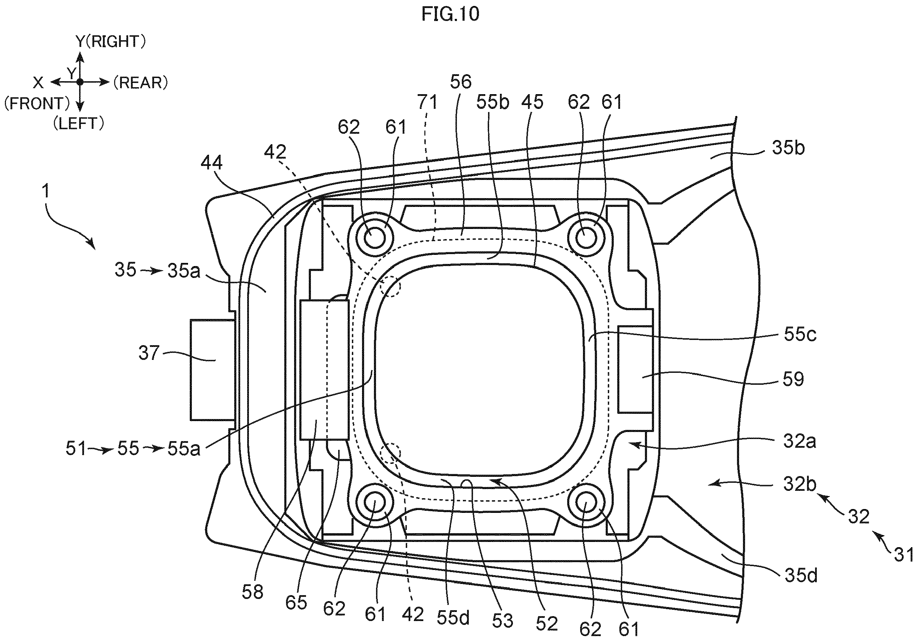

FIG. 10 is an enlarged plan view of part of the straddled electric vehicle 1. The entirety of the battery case 51 overlaps the housing member 31 in vehicle plan view. The entirety of the insertion opening 53 overlaps the housing member 31 in vehicle plan view.

For example, the entirety of each of the elastic members 61 overlaps the housing member 31 in vehicle plan view.

FIG. 10 illustrates the battery 45 supported by the battery case 51. When the battery 45 is supported by the battery case 51, the entirety of the battery 45 overlaps the housing member 31 in vehicle plan view. When the battery 45 is supported by the battery case 51, the entirety of the battery 45 overlaps the battery case 51 in vehicle plan view.

As described above when the seat 5 is in the closed position, the entirety of the housing member 31 overlaps the seat 5 in vehicle plan view. Therefore, when the seat 5 is in the closed position, the entirety of the battery case 51 overlaps the seat 5 in vehicle plan view. When the seat 5 is in the closed position, the entirety of the insertion opening 53 overlaps the seat 5 in vehicle plan view. When the seat 5 is in the closed position, the entirety of each of the elastic members 61 overlaps the seat 5 in vehicle plan view. When the battery 45 is supported by the battery case 51 and the seat 5 is in the closed position, the entirety of the battery 45 overlaps the seat 5 in vehicle plan view.

In FIG. 10, each of the fastening members 42 is indicated by a broken line. The battery case 51 overlaps the fastening members 42 in vehicle plan view. The insertion opening 53 overlaps the fastening members 42 in vehicle plan view. The battery 45 supported by the battery case 51 overlaps the fastening members 42 in vehicle plan view.

### 4. Electric Component 65 and Connector 67

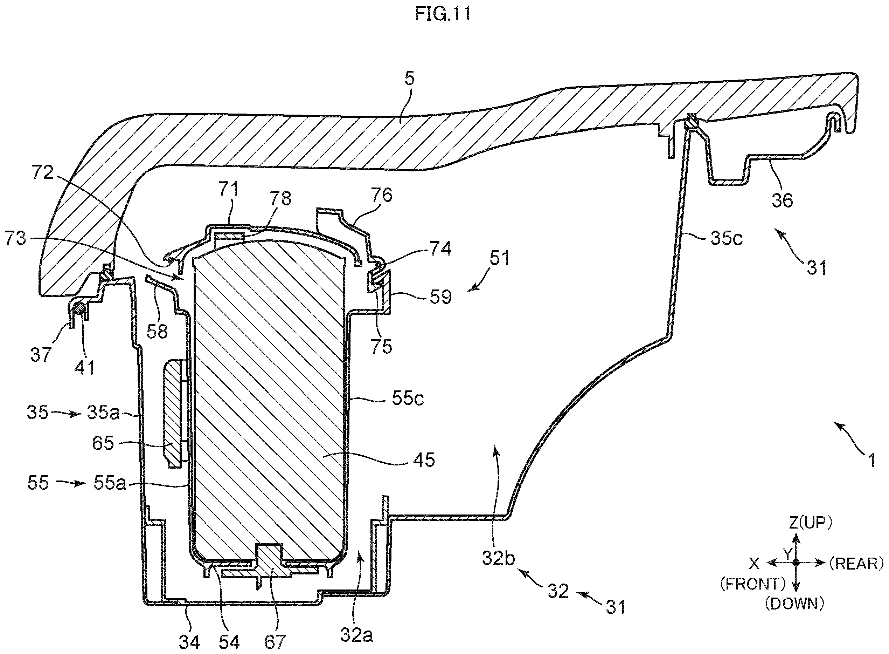

Refer to FIGS. 9 and 11. FIG. 11 is a cross-sectional view taken along line XI-XI of FIG. 6. FIG. 11 does not illustrate the vehicle body frame 21. FIG. 11 shows the seat 5 in the closed position. The straddled electric vehicle 1 includes an electric component 65. The electric component 65 is supported by the battery case 51. For example, the electric component 65 is supported by the cylindrical body 55. For example, the electric component 65 is supported by the front wall 55a. The electric component 65 is, for example, a controller of the battery 45. The electric component 65 is a controller that controls charging and discharging of the battery 45.

The straddled electric vehicle 1 includes a connector 67. The connector 67 is supported by the battery case 51. The connector 67 is installed at a lower part of the battery case 51. For example, the connector 67 is supported by the bottom 54. The connector 67 is electrically connected to the battery 45 supported by the battery case 51.

Refer to FIG. 11. The connector 67 penetrates the bottom 54. The connector 67 is inserted into the internal space 52.

FIG. 11 illustrates the battery 45 supported by the battery case 51. When the battery 45 is supported by the battery case 51, the connector 67 comes into contact with the lower part of the battery 45. When the battery 45 is placed on the bottom 54, the battery 45 is automatically connected to the connector 67. When the battery 45 moves upward and away from the bottom 54, the battery 45 automatically disengages from the connector 67.

The connector 67 is disposed below the seat 5. For example, the entirety of connector 67 is installed below the entirety of the seat 5. When the seat 5 is in the closed position, the entirety of the connector 67 is disposed below the seat 5.

At least part of the connector 67 is installed in the internal space 32. For example, the entirety of the connector 67 is installed in the internal space 32.

At least part of the connector 67 is installed in the battery chamber 32a. For example, the entirety of the connector 67 is installed in the battery chamber 32a.

The entirety of the connector 67 is disposed above the bottom 34.

The electric component 65 is disposed below the seat 5. For example, the entirety of the electric component 65 is installed below the entirety of the seat 5. When the seat 5 is in the closed position, the entirety of the electric component 65 is located below the seat 5.

At least part of the electric component 65 is installed in the internal space 32. For example, the entirety of the electric component 65 is installed in the internal space 32.

At least part of the electric component 65 is installed in the battery chamber 32a. For example, the entirety of the electric component 65 is installed in the battery chamber 32a.

The entirety of the electric component 65 is disposed above the bottom 34.

The electric component 65 is disposed in front of the battery case 51. The entirety of the electric component 65 is disposed in front of the entirety of the battery case 51. In other words, the battery case 51 is disposed behind the electric component 65. The entirety of the battery case 51 is disposed behind the entirety of the electric component 65. The battery case 51 separates the electric component 65 and the luggage room 32b. The battery case 51 is disposed between the electric component 65 and the luggage room 32b. The battery case 51 is disposed behind the electric component 65 and in front of the luggage room 32b.

The electric component 65 is not disposed in the internal space 52. That is, the electric component 65 is disposed outside the battery case 51. The entirety of the electric component 65 is installed outside the battery case 51.

The electric component 65 is smaller than the housing member 31. The electric component 65 is smaller than the battery case 51. The electric component 65 is smaller than the battery 45.

The connector 67 is smaller than the housing member 31. The connector 67 is smaller than the battery case 51. The connector 67 is smaller than the battery 45.

Refer to FIG. 9. At least part of electric component 65 overlaps the housing member 31 in vehicle side view. For example, the entirety of the electric component 65 overlaps the housing member 31 in vehicle side view.

At least part of the electric component 65 is disposed lower than the upper opening 33. For example, the entirety of the electric component 65 is disposed lower than the upper opening 33.

At least part of the connector 67 overlaps the housing member 31 in vehicle side view. For example, the entirety of the connector 67 overlaps the housing member 31 in vehicle side view.

At least part of the connector 67 is disposed lower than the upper opening 33. For example, the entirety of the connector 67 is disposed lower than the upper opening 33.

Refer to FIG. 10. FIG. 10 illustrates the electric component 65 by a solid line and a broken line. The entirety of the electric component 65 overlaps the housing member 31 in vehicle plan view. As described above when the seat 5 is in the closed position, the entirety of the housing member 31 overlaps the seat 5 in vehicle plan view. Therefore, when the seat 5 is in the closed position, the entirety of the electric component 65 overlaps the seat 5 in vehicle plan view.

At least part of the electric component 65 overlaps the battery case 51 in vehicle plan view. The electric component 65 does not overlap the battery 45 supported by the battery case 51 in vehicle plan view.

Although not illustrated, the entirety of the connector 67 overlaps the housing member 31 in vehicle plan view. When the seat 5 is in the closed position, the entirety of the connector 67 overlaps the seat 5 in vehicle plan view.

Although not illustrated, at least part of the connector 67 overlaps the battery case 51 in vehicle plan view. At least part of the connector 67 overlaps the battery 45 supported by the battery case 51 in vehicle plan view.

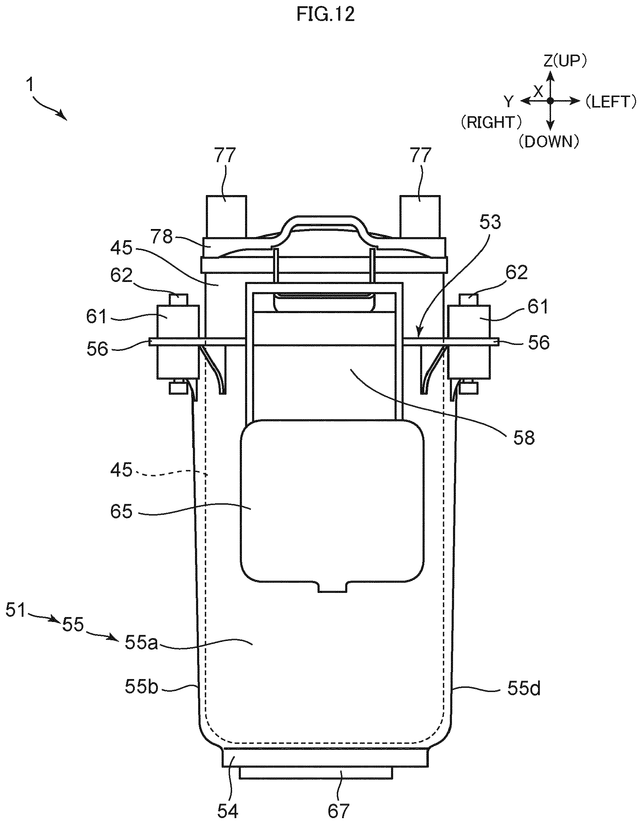

FIG. 12 is a front view of the battery case 51 and the electric component 65. The entirety of the electric component 65 overlaps the battery case 51 in vehicle front view. The entirety of the electric component 65 overlaps the cylindrical body 55 in vehicle front view. The entirety of the electric component 65 overlaps the front wall 55a in vehicle front view.

The electric component 65 is disposed lower than each of the elastic members 61. For example, the entirety of the electric component 65 is disposed lower than the entirety of each of the elastic members 61.

The electric component 65 is disposed lower than the flange 56. For example, the entirety of the electric component 65 is disposed lower than the flange 56. Accordingly, the electric component 65 is disposed lower than the insertion opening 53. For example, the entirety of the electric component 65 is disposed lower than the insertion opening 53.

The electric component 65 is disposed higher than the bottom 54. For example, the entirety of the electric component 65 is disposed higher than the bottom 54.

The connector 67 is disposed lower than each of the elastic members 61. For example, the entirety of the connector 67 is disposed lower than the entirety of each of the elastic members 61.

The connector 67 is disposed lower than the insertion opening 53. For example, the entirety of the connector 67 is disposed lower than the insertion opening 53.

The connector 67 is disposed lower than the electric component 65. For example, the entirety of the connector 67 is disposed lower than the entirety of the electric component 65.

Refer to FIGS. 8 and 9. The straddled electric vehicle 1 includes an electric wire 68. The electric wire 68 is connected to the connector 67. The electric wire 68 extends forward from the connector 67, for example.

### 5. Lid 71

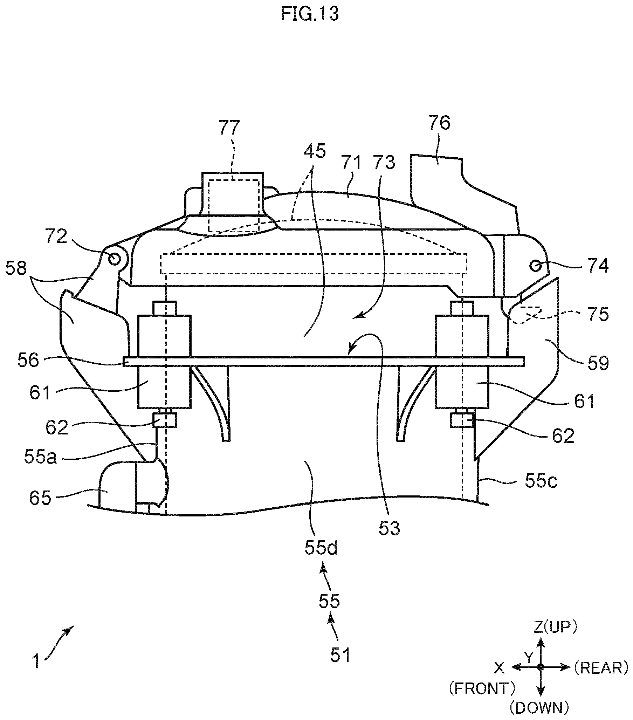

FIG. 13 is an enlarged side view of a lid 71. The straddled electric vehicle 1 includes the lid 71. The lid 71 is supported by the battery case 51. For example, the lid 71 is supported by the cylindrical body 55.

The battery case 51 includes a support 58. The support 58 is disposed in front of the cylindrical body 55. The support 58 is connected to the cylindrical body 55. For example, the support 58 is connected to the front wall 55a. The support 58 extends upward from the cylindrical body 55. The support 58 extends to a position higher than the cylindrical body 55.

The straddled electric vehicle 1 includes a hinge shaft 72. The hinge shaft 72 is supported by the support 58. The hinge shaft 72 extends in the transverse direction Y. The lid 71 is supported by the hinge shaft 72.

The lid 71 is rotatable about the hinge shaft 72 with respect to the battery case 51. The lid 71 is movable between a closed position and an opened position.

FIG. 13 shows the lid 71 in the closed position. The lid 71 is installed above the battery case 51. When the lid 71 is in the closed position, the lid 71 is installed above the battery case 51.

The lid 71 is disposed above the insertion opening 53. When the lid 71 is in the closed position, the lid 71 is disposed above the insertion opening 53.

The lid 71 is installed above the battery 45 supported by the battery case 51. When the lid 71 is in the closed position, the lid 71 is installed above the battery 45 supported by the battery case 51. When the lid 71 is in the closed position, the lid 71 prohibits the battery 45 from moving between the internal space 52 and the outside of the battery case 51.

FIG. 3 shows the lid 71 in the opened position. When the lid 71 is in the opened position, the battery case 51 is opened upward. When the lid 71 is in the opened position, the lid 71 allows the battery 45 to move between the internal space 52 and the outside of the battery case 51.

Refer to FIG. 13. Even when the lid 71 is in the closed position, the lid 71 does not seal the insertion opening 53. Even when the lid 71 is in the closed position, the lid 71 does not come into close contact with the battery case 51. Even when the lid 71 is in the closed position, the lid 71 does not come into contact with the cylindrical body 55. The straddled electric vehicle 1 does not include a seal member for bringing the battery case 51 and the lid 71 into close contact with each other.

When the lid 71 is in the closed position, the lid 71 and the battery case 51 form a gap 73. The gap 73 is located between the lid 71 and the battery case 51. The gap 73 is located below the lid 71 and above the battery case 51. Even when the lid 71 is in the closed position, the internal space 52 communicates with the outside of the battery case 51 via the gap 73. The straddled electric vehicle 1 does not include a seal member for sealing the gap 73.

The battery case 51 includes an engagement part 59. The engagement part 59 is disposed behind the support 58. The engagement part 59 is disposed behind the cylindrical body 55. The engagement part 59 is connected to the cylindrical body 55. For example, the engagement part 59 is connected to the rear wall 55c. The engagement part 59 extends upward from the cylindrical body 55. The engagement part 59 extends to a position higher than the cylindrical body 55.

The straddled electric vehicle 1 includes a rotation shaft 74 and a claw 75. The rotation shaft 74 and the claw 75 are disposed behind the hinge shaft 72. The rotation shaft 74 is supported by the lid 71. The rotation shaft 74 is rotatable about the hinge shaft 72 with respect to the battery case 51. The rotation shaft 74 extends in the transverse direction Y. The claw 75 is supported by the rotation shaft 74. The claw 75 is rotatable about the hinge shaft 72 with respect to the battery case 51. The claw 75 is rotatable about the rotation shaft 74 with respect to the lid 71. When the lid 71 is in the closed position, the claw 75 is engageable with the engagement part 59 and is disengageable from the engagement part 59.

When the lid 71 is in the closed position and the claw 75 engages the engagement part 59, the claw 75 is immovable upward relative to engagement part 59. Therefore, the lid 71 is not rotatable about the hinge shaft 72 with respect to the battery case 51. The lid 71 is immovable from the closed position to the opened position. That is, the lid 71 is locked in the closed position. The lid 71 is held in the closed position.

When the claw 75 is disengaged from the engagement part 59, the claw 75 is movable upward with respect to the engagement part 59. Therefore, the lid 71 is rotatable about the hinge shaft 72 with respect to the battery case 51. The lid 71 is movable from the closed position to the opened position. That is, the lock of the lid 71 is released.

The straddled electric vehicle 1 includes a laver 76. The lever 76 is connected to the claw 75. The lever 76 rotates integrally with the claw 75. The lever 76 is also rotatable about the rotation shaft 74 with respect to the lid 71. The lever 76 is also rotatable about the hinge shaft 72 with respect to the battery case 51. The lever 76 extends upward from the claw 75. The lever 76 extends to a position higher than the lid 71. Therefore, when the seat 5 is in the opened position, it is easy for the user of the straddled electric vehicle 1 to operate the lever 76. It is easy to move the lid 71 between the opened position and the closed position by operating the lever 76. It is easy to engage the claw 75 with the engagement part 59 by operating the lever 76. It is easy to disengage the claw 75 from the engagement part 59 by operating the lever 76.

The straddled electric vehicle 1 includes one or more pressing members 77. In FIG. 13, the pressing member 77 is indicated by a broken line. In FIG. 12, illustration of the lid 71 is omitted. FIG. 12 illustrates the pressing members 77 when the lid 71 is in the closed position. The number of the pressing members 77 is, for example, two.

The pressing members 77 each press the battery 45 supported by the battery case 51 against the connector 67. The pressing members 77 each are supported by the lid 71. The pressing members 77 each extend downward from the lid 71. The pressing members 77 each are, for example, elastic bodies. The pressing members 77 each are, for example, springs.

Refer to FIG. 12. The straddled electric vehicle 1 further includes a pad 78. The pad 78 is supported by each of the pressing members 77. The pad 78 is attached to a lower part of each of the pressing members 77. The pad 78 has a substantially horizontal plate shape.

When the lid 71 is in the closed position, the pressing members 77 each and the pad 78 are located above the battery 45 supported by the battery case 51. When the lid 71 is in the closed position, the pad 78 contacts the battery 45 supported by the battery case 51. When the lid 71 is in the closed position, the pad 78 contacts the top of the battery 45. When the lid 71 is in the closed position, the pressing members 77 each are compressed and deformed. When the lid 71 is locked in the closed position, the pressing members 77 each are compressed and deformed. When the lid 71 is in the closed position, the pressing members 77 each press battery 45 supported by battery case 51 downward. The pressing members 77 each press the battery 45 downward via the pad 78. The pressing members 77 each press the battery 45 supported by the battery case 51 toward the connector 67. The battery 45 is pressed toward the connector 67. As a result, the battery 45 and the connector 67 are reliably electrically connected.

The disposition of the lid 71 and the like will be described. FIGS. 7 and 11 each show the lid 71 in the closed position. The lid 71 is installed below the seat 5. The entirety of the lid 71 is installed below the entirety of the seat 5. When the lid 71 is in the closed position and the seat 5 is in the closed position, the entirety of the lid 71 is located below the seat 5.

The hinge shaft 72, the rotation shaft 74, the claw 75, the lever 76, the pressing members 77, and the pad 78 are configured in the same manner as the lid 71. For example, the pressing members 77 each are installed below the seat 5. The entirety of each of the pressing members 77 is installed below the entirety of the seat 5. When the lid 71 is in the closed position and the seat 5 is in the closed position, the entirety of each of the pressing members 77 is located below the seat 5.

At least part of the lid 71 is installed in the internal space 32. At least part of the lid 71 is installed in the battery chamber 32a. The entirety of the lid 71 is disposed above the bottom 34.

FIG. 9 shows the lid 71 in the closed position. When the lid 71 is in the closed position, at least part of the lid 71 overlaps the housing member 31 in vehicle side view. When the lid 71 is in the closed position, at least part of the lid 71 is disposed below the upper opening 33.

At least part of the lever 76 does not overlap the housing member 31 in vehicle side view. At least part of the lever 76 is located above the housing member 31 in vehicle side view. At least part of the lever 76 is located above the upper opening 33.

The lid 71 is disposed higher than each of the elastic members 61. The entirety of the lid 71 is disposed higher than the entirety of each of the elastic members 61.

The lid 71 is disposed higher than the electric component 65. The entirety of the lid 71 is disposed higher than the entirety of the electric component 65.

The lid 71 is disposed higher than the connector 67. The entirety of the lid 71 is disposed higher than the entirety of the connector 67.

The lid 71 is smaller than the housing member 31. The lid 71 is smaller than the battery case 51. The lid 71 is smaller than the battery 45.

The hinge shaft 72, the rotation shaft 74, the claw 75, the lever 76, the pressing members 77, and the pad 78 are configured in the same manner as the lid 71. For example, the pressing members 77 each are smaller than the housing member 31. The pressing members 77 each are smaller than the battery case 51. The pressing members 77 each are smaller than the battery 45.

FIG. 6 shows the lid 71 in the closed position. When the lid 71 is in the closed position, and the seat 5 is in the closed position, the entirety of the lid 71 overlaps the seat 5 in vehicle plan view.

When the lid 71 is in the closed position, the entirety of the lid 71 overlaps the housing member 31 in vehicle plan view. When the lid 71 is in the closed position, the lid 71 does not overlap each of the elastic members 61 in vehicle plan view.

FIG. 10 shows the lid 71 in the closed position by a broken line. When the lid 71 is in the closed position, the entirety of the insertion opening 53 overlaps the lid 71 in vehicle plan view. That is, when the lid 71 is in the closed position, the lid 71 closes insertion opening 53. "When the lid 71 is in the closed position" is synonymous with "when the lid 71 closes the insertion opening 53". When the lid 71 is in the opened position, at least part of the insertion opening 53 does not overlap the lid 71 in vehicle plan view. "When the lid 71 is in the opened position" is synonymous with "when the lid 71 opens the insertion opening 53". To sum up, the lid 71 is configured to open and close the insertion opening 53.

Further, when the lid 71 is in the closed position and the seat 5 is in the closed position, the entirety of the insertion opening 53 overlaps the lid 71 in vehicle plan view, and the entire insertion opening 53 overlaps the seat 5 in vehicle plan view.

When the battery 45 is supported by the battery case 51 and the lid 71 is in the closed position, the entirety of the battery 45 overlaps the lid 71 in vehicle plan view. Therefore, when the battery 45 is supported by the battery case 51, the lid 71 is in the closed position, and the seat 5 is in the closed position, the entirety of the battery 45 overlaps the lid 71 in vehicle plan view, and the entirety of the battery 45 overlaps the seat 5 in vehicle plan view.

When the lid 71 is in the closed position, the lid 71 overlaps the fastening members 42 in vehicle plan view.

Although not illustrated, when the lid 71 is in the closed position, the entirety of each of the pressing members 77 overlaps the lid 71 in vehicle plan view. Therefore, when the lid 71 is in the closed position, and the seat 5 is in the closed position, the entirety of each of the pressing members 77 overlaps the seat 5 in vehicle plan view. When the lid 71 is in the closed position, the entirety of each of the pressing members 77 overlaps the housing member 31 in vehicle plan view. When the lid 71 is in the closed position, the entirety of each of the pressing members 77 overlaps the insertion opening 53 in vehicle plan view. When the lid 71 is in the closed position, the entirety of each of the pressing members 77 overlaps the battery 45 supported by the battery case 51 in vehicle plan view.

### 6. Transmission of Vibration

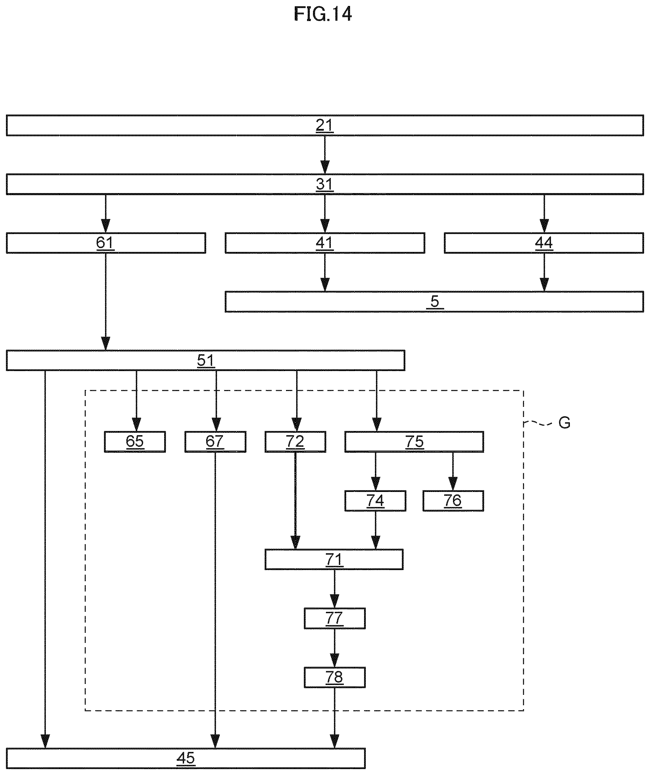

FIG. 14 is a diagram for explaining a vibration transmission path. As described above, the vehicle body frame 21 is in contact with the housing member 31. The housing member 31 is in contact with each of the elastic members 61, the hinge shaft 41, and the seal member 44. The elastic members 61 are each in contact with the battery case 51. The hinge shaft 41 and the seal member 44 are in contact with the seat 5. The battery case 51 is in contact with the battery 45 supported by the battery case 51. Further, the battery case 51 is in contact with the electric component 65, the connector 67, the hinge shaft 72, and the claw 75. The connector 67 is in contact with the battery 45 supported by the battery case 51. The claw 75 is in contact with the rotation shaft 74 and the lever 76. The hinge shaft 72 and the rotation shaft 74 are in contact with the lid 71. The lid 71 is in contact with each of the pressing members 77. The pressing members 77 are each in contact with the pad 78. The pad 78 is in contact with the battery 45 supported by the battery case 51.

Therefore, the vibration of the vehicle body frame 21 is transmitted as follows. The vehicle body frame 21 directly transmits vibration to the housing member 31. The housing member 31 directly transmits vibration to each of the elastic members 61, the hinge shaft 41, and the seal member 44. Here, the elastic members 61 each reduce vibration. The elastic members 61 each directly transmit the vibration to the battery case 51. The hinge shaft 41 and the seal member 44 directly transmit vibration to the seat 5. The battery case 51 directly transmits vibration to the battery 45 supported by the battery case 51. Further, the battery case 51 directly transmits the vibration to the electric component 65, the connector 67, the hinge shaft 72, and the claw 75. The connector 67 directly transmits vibration to the battery 45 supported by the battery case 51. The claw 75 directly transmits vibration to the rotation shaft 74 and the lever 76. The hinge shaft 72 and the rotation shaft 74 directly transmit vibration to the lid 71. The lid 71 directly transmits the vibration to each of the pressing members 77. The pressing members 77 each directly transmit the vibration to the pad 78. The pad 78 directly transmits vibration to the battery 45.

The vehicle body frame 21 is not in contact with any of the elastic members 61, the battery case 51, and the battery 45. Therefore, the vehicle body frame 21 does not directly transmit vibration to any of the elastic members 61, the battery case 51, and the battery 45.

For convenience, the electric component 65, the connector 67, the lid 71, the hinge shaft 72, the rotation shaft 74, the claw 75, the lever 76, the pressing members 77, and the pad 78 are referred to as "members G". Each of the members G is supported by the battery case 51. The vehicle body frame 21 is not in contact with any of the members G. Therefore, the vehicle body frame 21 does not directly transmit the vibration to any of the members G.

The seat 5 is not in contact with any of the elastic members 61, the battery case 51, and the battery 45. Therefore, the seat 5 does not directly transmit vibration to any of the elastic members 61, the battery case 51, and the battery 45. The seat 5 is not in contact with any of the members G. Therefore, the seat 5 does not directly transmit the vibration to any of the members G.

The housing member 31 is not in contact with either of the battery case 51 and the battery 45. Therefore, the housing member 31 does not directly transmit vibration to both of the battery case 51 and the battery 45. The housing member 31 is not in contact with any of the members G. Therefore, housing member 31 does not directly transmit the vibration to any of the members G.

Each of the elastic members 61 is not in contact with the battery 45. Therefore, the elastic members 61 each do not directly transmit vibration to the battery 45. The elastic members 61 each are not in contact with any of the members G. Therefore, the elastic members 61 each do not directly transmit the vibration to any of the members G.

### 7. Effects of Embodiment

The straddled electric vehicle 1 includes an electric motor 12, a battery 45, and a seat 5. The electric motor 12 propels the straddled electric vehicle 1. The battery 45 supplies power to the electric motor 12. The battery 45 is installed below the seat 5. Therefore, the position of the battery 45 is relatively high. For example, at least part of the battery 45 is disposed at a position higher than the foot board 4. Therefore, it is easy to attach and detach the battery 45 to and from the straddled electric vehicle 1.

The straddled electric vehicle 1 includes a housing member 31. The housing member 31 is installed below the seat 5. The housing member 31 blocks pebbles and mud. At least part of the battery 45 is installed in the internal space 32 of the housing member 31. Therefore, the battery 45 is not exposed to pebbles or mud. The housing member 31 protects the battery 45 from pebbles and mud. Therefore, the battery 45 is less likely damaged. The battery 45 is less likely defaced and damaged.

The straddled electric vehicle 1 includes a vehicle body frame 21 and a battery case 51. The housing member 31 is supported by the vehicle body frame 21. The battery case 51 is supported by the housing member 31. The battery 45 is supported by the battery case 51. Here, the battery case 51 is supported by the housing member 31 via each of the elastic members 61. Specifically, the straddled electric vehicle 1 includes the elastic members 61. Each of the elastic members 61 is installed between the housing member 31 and the battery case 51. Each of the elastic members 61 connects the housing member 31 and the battery case 51. The housing member 31 supports the battery case 51 via each of the elastic members 61. The battery case 51 is mounted on the housing member 31 via each of the elastic members 61. Therefore, the elastic members 61 each reduce vibration of the battery case 51. For example, the vibration is transmitted from the vehicle body frame 21 to the housing member 31. The vibration is transmitted from the housing member 31 to the battery case 51. Further, the vibration is transmitted from the battery case 51 to the battery 45. The elastic members 61 each reduce vibration transmitted from the housing member 31 to the battery case 51 without reducing vibration transmitted from the vehicle body frame 21 to the housing member 31. Therefore, the elastic members 61 each effectively reduce vibration of the battery case 51. Therefore, the vibration of the battery 45 is effectively reduced. For example, the vibration of the battery 45 does not become excessively strong. Even when the vehicle body frame 21 vibrates strongly, the vibration of the battery 45 does not become excessively strong. In other words, the acceleration applied to the battery 45 does not become excessively large. The impact applied to the battery 45 does not become excessively large. In short, the elastic members 61 each protect the battery 45 from vibration. Therefore, the battery 45 is less likely to fail.

As described above, the straddled electric vehicle 1 allows easy attachment and detachment of the battery 45 to and from the straddled electric vehicle 1. Further, the straddled electric vehicle 1 protects the battery 45 from pebbles and mud. Further, the straddled electric vehicle 1 sufficiently reduces vibration of the battery 45.

The entirety of the battery case 51 overlaps the housing member 31 in vehicle plan view. Therefore, the battery case 51 is smaller than the housing member 31. The smaller the battery case 51, the easier it is to control the vibration of the battery case 51. Therefore, the elastic members 61 each more effectively reduce vibration of the battery case 51. Accordingly, the elastic members 61 each more effectively reduce vibration of the battery 45.

When the battery 45 is supported by the battery case 51, the entirety of the battery 45 overlaps the housing member 31 in vehicle plan view. Therefore, the battery 45 is smaller than the housing member 31. Therefore, the elastic members 61 each more effectively reduce vibration of the battery 45.

The entirety of the battery case 51 overlaps the housing member 31 in vehicle side view. Therefore, the battery case 51 is even smaller than the housing member 31. Therefore, the elastic members 61 each more effectively reduce vibration of the battery 45.

At least part of the battery case 51 is installed in the internal space 32 of the housing member 31. As described above, the housing member 31 blocks pebbles and mud. Therefore, the battery case 51 is not exposed to pebbles or mud. The housing member 31 protects the battery case 51 from pebbles and mud. Therefore, the battery case 51 is less likely damaged. The battery case 51 is less likely defaced and damaged.

For example, the entirety of each of the elastic members 61 overlaps the housing member 31 in vehicle plan view. Therefore, the elastic members 61 each suitably connect the housing member 31 and the battery case 51.

At least part of each of the elastic members 61 is installed in the internal space 32 of the housing member 31. As described above, the housing member 31 blocks pebbles and mud. Therefore, the elastic members 61 each are not exposed to pebbles or mud. The housing member 31 protects each of the elastic members 61 from pebbles and mud. Therefore, each of the elastic members 61 is less likely damaged. Each of the elastic members 61 is less likely defaced and damaged.

The straddled electric vehicle 1 includes an electric component 65. The electric component 65 is supported by the battery case 51. As described above, the elastic members 61 each effectively reduce vibration of the battery case 51. Therefore, the vibration of the electric component 65 is also effectively reduced. Accordingly, the vibration of the electric component 65 is not excessively strong. In short, the elastic members 61 each protect the electric component 65 from vibration. Thus, the electric component 65 is less likely to fail.

The entirety of the electric component 65 overlaps the housing member 31 in vehicle plan view. Therefore, the electric component 65 is smaller than the housing member 31. Therefore, the elastic members 61 each more effectively reduce vibration of the electric component 65.

At least part of the electric component 65 is installed in the internal space 32 of the housing member 31. As described above, the housing member 31 blocks pebbles and mud. Therefore, the electric component 65 is not exposed to pebbles or mud. The housing member 31 protects the electric component 65 from pebbles and mud. Therefore, the electric component 65 is less likely damaged. The electric component 65 is less likely defaced and damaged.

The battery 45 is disposed in the internal space 52 of the battery case 51. Therefore, the battery case 51 suitably supports the battery 45. The electric component 65 is disposed outside of the battery case 51. That is, the battery 45 and the electric component 65 are separated from each other by the battery case 51. Therefore, it is easy to reduce the influence of the battery 45 and the electric component 65 on each other. For example, the battery case 51 protects the electric component 65 from the battery 45. For example, the battery case 51 protects the battery 45 from the electric component 65.

The housing member 31 has the luggage room 32b for putting luggage. Therefore, the housing member 31 is large. It is more difficult to control the vibration of the housing member 31 as the housing member 31 becomes larger. However, the battery case 51 is supported by the housing member 31 via each of the elastic members 61. Therefore, even when the housing member 31 is large, the elastic members 61 each effectively reduce vibration of the battery case 51. Therefore, even when the housing member 31 is large, the straddled electric vehicle 1 sufficiently reduces the vibration of the battery 45.

The battery case 51 is disposed between the electric component 65 and the luggage room 32b. That is, the electric component 65 and the luggage are separated from each other by the battery case 51. Therefore, the battery case 51 prevents interference between the electric component 65 and the luggage. Accordingly, the battery case 51 protects the electric component 65 from the luggage.

The battery case 51 is disposed behind the electric component 65 and in front of the luggage room 32b. The entirety of the electric component 65 overlaps the battery case 51 in vehicle front view. Therefore, the battery case 51 more reliably prevents interference between the electric component 65 and the luggage.

The housing member 31 has an upper opening 33. The upper opening 33 is formed at an upper part of the housing member 31. The seat 5 is configured to open and close the upper opening 33. The battery case 51 has an insertion opening 53 for inserting the battery 45 into the battery case 51. The insertion opening 53 is formed at an upper part of the battery case 51. The straddled electric vehicle 1 includes the lid 71. The lid 71 is installed below the seat 5 and above the battery case 51. The lid 71 is configured to open and close the insertion opening 53. When the seat 5 closes the upper opening 33, the entirety of the insertion opening 53 overlaps the seat 5 in vehicle plan view. That is, the seat 5 covers the insertion opening 53 of the battery case 51. When the lid 71 closes the insertion opening 53, the entirety of the insertion opening 53 overlaps the lid 71 in vehicle plan view. That is, the lid 71 covers the insertion opening 53 of the battery case 51. In summary, the insertion opening 53 is doubly covered by the seat 5 and the lid 71.

Therefore, each of the seat 5 and the lid 71 suitably protects the battery 45 supported by the battery case 51.

When the seat 5 closes the upper opening 33, the entirety of the battery 45 supported by the battery case 51 overlaps the seat 5 in vehicle plan view. That is, the seat 5 covers the battery 45 supported by the battery case 51. When the lid 71 closes the insertion opening 53, the entirety of the battery 45 supported by the battery case 51 overlaps the lid 71 in vehicle plan view. That is, the lid 71 covers the battery 45 supported by the battery case 51. In summary, the battery 45 supported by the battery case 51 is doubly covered by the seat 5 and the lid 71. Therefore, each of the seat 5 and the lid 71 suitably protects the battery 45 supported by the battery case 51.

The straddled electric vehicle 1 includes a connector 67. The connector 67 is electrically connected to the battery 45 supported by the battery case 51. As described above, the elastic members 61 each effectively reduce vibration of the battery case 51. The connector 67 is supported by the battery case 51. Therefore, the vibration of the connector 67 is also effectively reduced. Accordingly, the vibration of the connector 67 is not excessively strong. In short, the elastic members 61 each protect the connector 67 from vibration. Thus, the connector 67 is less likely to fail. Further, both the battery 45 and the connector 67 are supported by the battery case 51. Therefore, when the battery 45 is supported by the battery case 51, a difference between vibration of the battery 45 and vibration of the connector 67 is small. Therefore, when the battery 45 is supported by the battery case 51, it is easy to maintain the electrical connection between the battery 45 and the connector 67.

The entirety of the connector 67 overlaps the housing member 31 in vehicle plan view. Therefore, the connector 67 is smaller than the housing member 31. Therefore, the elastic members 61 each more effectively reduce vibration of the connector 67.

At least part of the connector 67 is installed in the internal space 32 of the housing member 31. As described above, the housing member 31 blocks pebbles and mud. Therefore, the connector 67 is not exposed to pebbles or mud. The housing member 31 protects the connector 67 from pebbles and mud. Therefore, the connector 67 is less likely damaged. The connector 67 is less likely defaced and damaged.

The straddled electric vehicle 1 includes pressing members 77. The pressing members 77 each press the battery 45 supported by the battery case 51 against the connector 67. Therefore, when the battery 45 is supported by the battery case 51, the pressing members 77 each suitably maintain the electrical connection between the battery 45 and the connector 67.

The pressing members 77 each are supported by the lid 71. As described above, the lid 71 is installed above the battery case 51. Therefore, when the lid 71 closes the insertion opening 53 of the battery case 51, the lid 71 and each of the pressing members 77 are respectively located above the battery 45 supported by the battery case 51. Therefore, when the lid 71 closes the insertion opening 53 of the battery case 51, it is easy for each of the pressing members 77 to press the battery 45 supported by the battery case 51 downward.

The connector 67 is installed at a lower part of the battery case 51. Therefore, pressing the battery 45 supported by the battery case 51 downward corresponds to pressing the battery 45 supported by the battery case 51 against the connector 67. Therefore, when the lid 71 closes the insertion opening 53, it is easy for each of the pressing members 77 to press the battery 45 supported by the battery case 51 against the connector 67.

The lid 71 is supported by the battery case 51. As described above, the elastic members 61 each effectively reduce vibration of the battery case 51. Therefore, the vibration of the lid 71 is also effectively reduced. Accordingly, the vibration of the lid 71 is not excessively strong. The pressing members 77 each are supported by the lid 71. The pressing members 77 each are supported by the battery case 51 via the lid 71. Therefore, the vibration of each the pressing members 77 is also effectively reduced. Accordingly, the vibration of each of the pressing members 77 is not excessively strong. Therefore, even when each of the pressing members 77 presses the battery 45 supported by the battery case 51, the vibration of the battery 45 does not become excessively strong. In short, even when each of the pressing members 77 presses the battery 45 supported by the battery case 51, each of the elastic members 61 protects the battery 45 from vibration.

When the lid 71 closes the insertion opening 53 of the battery case 51, the entirety of the lid 71 overlaps the housing member 31 in vehicle plan view. Therefore, the lid 71 is smaller than the housing member 31. Therefore, each of the elastic members 61 more effectively reduces vibration of the lid 71.

When the lid 71 closes the insertion opening 53 of the battery case 51, the entirety of each of the pressing members 77 overlaps the housing member 31 in vehicle plan view. Therefore, each of the pressing members 77 is smaller than the housing member 31. Therefore, each of the elastic members 61 more effectively reduces vibration of each of the pressing members 77.

When the seat 5 closes the upper opening 33, the seat 5 seals the upper opening 33 via the seal member 44. Thus, when the seat 5 closes the upper opening 33, the seat 5 prevents water from entering the internal space 32 of the housing member 31. Therefore, the battery case 51 does not need to include a structure for protecting the battery 45 supported by the battery case 51 from water. Therefore, it is easy to simplify the structure of the battery case 51. For example, the straddled electric vehicle 1 does not include a seal member for bringing the battery case 51 and the lid 71 into close contact with each other. For example, when the lid 71 is in the closed position, the lid 71 and the battery case 51 form a gap 73. For example, the straddled electric vehicle 1 does not include a seal member for sealing the gap 73.

### 8. Modifications

This invention is not limited to the embodiment described above, but may be modified as follows.
(1) In the embodiment, the seal member 44 is attached to the housing member 31. However, the present invention is not limited to this. The seal member 44 may be attached to the seat 5.
(2) In the embodiment, the straddled electric vehicle 1 includes a seal member 44. However, the present invention is not limited to this. The seal member 44 may be omitted.
(3) In the embodiment, the pad 78 comes into contact with the battery 45 supported by the battery case 51. However, the present invention is not limited to this. Each of the pressing members 77 may come into contact with the battery 45 supported by the battery case 51. The lid 71 may come into contact with the battery 45 supported by the battery case 51.
(4) In the embodiment, the electric motor 12 is swingable with respect to the vehicle body frame 21. However, the present invention is not limited to this. The electric motor 12 may not be swingable with respect to the vehicle body frame 21. The electric motor 12 may be fixed to the vehicle body frame 21.
(5) In the present embodiment, the number of front wheels 8 is one. However, the present invention is not limited to this. The number of front wheels 8 may be two. In the embodiment, the number of rear wheels 14 is one. The present invention is not limited to this. The number of rear wheels 14 may be two.
(6) In the present embodiment, a scooter-type vehicle as the straddled electric vehicle 1 is exemplified. However, the present invention is not limited thereto. For example, the straddled electric vehicle 1 may be changed to other types of vehicles such as a street type, a sports type, an off-road type, and an all-terrain vehicle.
(7) The foregoing embodiment and each of the modified embodiments described in paragraphs (1) to (6) above may be further varied as appropriate by replacing or combining their constructions with the constructions of the other modified embodiments.

### Reference Signs List

1: straddled electric vehicle
3: handlebar
4: foot board
5: seat
11: power unit
12: electric motor
13: case
21: vehicle body frame
31: housing member
32: internal space
32a: battery chamber
32b: luggage room
33: upper opening
41: hinge shaft
44: seal member
45: battery
51: battery case
52: internal space
53: insertion opening
61: elastic member
65: electric component
67: connector
71: lid
72: hinge shaft
73: gap
74: rotation shaft
75: claw
76: lever
77: pressing member
78: pad
X: longitudinal direction of straddled electric vehicle
Y: transverse direction of straddled electric vehicle
Z: up-down direction of straddled electric vehicle

## Claims

1. A straddled electric vehicle (1) comprising:
a vehicle body frame (21);
a seat (5);
a housing member (31) supported by the vehicle body frame (21) and installed below the seat (5);
an electric motor (12) configured to propel the straddled electric vehicle (1);
a battery (45) configured to supply power to the electric motor (12), the battery (45) being installed below the seat (5), at least part of the battery (45) being installed in an internal space (32) of the housing member (31); and
a battery case (51) configured to support the battery (45);
wherein the battery case (51) is supported by the housing member (31) via an elastic member (61).

2. The straddled electric vehicle according to claim 1, wherein an entirety of the battery case (51) overlaps the housing member (31) in plan view of the straddled electric vehicle (1).

3. The straddled electric vehicle according to claim 1 or 2, wherein an entirety of the battery case (51) overlaps the housing member (31) in side view of the straddled electric vehicle (1).

4. The straddled electric vehicle according to any one of claims 1 to 3, wherein at least part of the battery case (51) is installed in the internal space (32) of the housing member (31).

5. The straddled electric vehicle according to any one of claims 1 to 4, wherein at least part of the elastic member (61) is installed in the internal space (32) of the housing member (31).

6. The straddled electric vehicle according to any one of claims 1 to 5, the straddled electric vehicle (1) comprising an electric component (65) supported by the battery case (51).

7. The straddled electric vehicle according to claim 6, wherein an entirety of the electric component (65) overlaps the housing member (31) in plan view of the straddled electric vehicle (1).

8. The straddled electric vehicle according to claim 6 or 7, wherein at least part of the electric component (65) is installed in the internal space (32) of the housing member (31).

9. The straddled electric vehicle according to any one of claims 6 to 8, wherein
the battery (45) is disposed in an internal space (52) of the battery case (51), and
the electric component (65) is disposed outside the battery case (51).

10. The straddled electric vehicle according to any one of claims 6 to 9, wherein
the housing member (31) includes a luggage room (32b) for placing luggage, and
the battery case (51) is disposed between the electric component (65) and the luggage room (32b).

11. The straddled electric vehicle according to claim 10, wherein
the battery case (51) is disposed behind the electric component (65) and in front of the luggage room (32b), and
an entirety of the electric component (65) overlaps the battery case (51) in front view of the straddled electric vehicle (1).

12. The straddled electric vehicle according to any one of the foregoing claims, wherein
the housing member (31) includes an upper opening (33) formed at an upper part of the housing member (31),
the seat (5) is configured to open and close the upper opening (33),
the battery case (51) has an insertion opening (53) for inserting the battery (45) into the battery case (51), the insertion opening (53) being formed on an upper part of the battery case (51),
the straddled electric vehicle (1) comprises a lid (71) installed below the seat (5) and above the battery case (51),
the lid (71) is configured to open and close the insertion opening (53),
when the seat (5) closes the upper opening (33), an entirety of the insertion opening (53) overlaps the seat (5) in plan view of the straddled electric vehicle (1), and
when the lid (71) closes the insertion opening (53), the entirety of the insertion opening (53) overlaps the lid (71) in plan view of the straddled electric vehicle (1).

13. The straddled electric vehicle according to claim 12, the straddled electric vehicle (1) comprising a connector (67) electrically connected to the battery (45) supported by the battery case (51),
wherein the connector (67) is supported by the battery case (51).

14. The straddled electric vehicle according to claim 13, the straddled electric vehicle (1) comprising a pressing member (77) configured to press the battery (45) supported by the battery case (51) against the connector (67),
wherein the lid (71) is supported by the battery case (51),
the pressing member (77) is supported by the lid (71),
the connector (67) is installed at a lower part of the battery case (51), and
when the lid (71) closes the insertion opening (53) of the battery case (51), the pressing member (77) presses the battery (45) supported by the battery case (51) downward.

15. The straddled electric vehicle according to any one of claims 12 to 14, wherein when the seat (5) closes the upper opening (33), the seat (5) seals the upper opening (33) via a seal member (44).
